(19) Europäisches Patentamt
European Patent Office
Office européen des brevets

(11) **EP 4 296 083 B1**

(12) **EUROPEAN PATENT SPECIFICATION**

(45) Date of publication and mention of the grant of the patent:
**02.07.2025 Bulletin 2025/27**

(21) Application number: **23175490.4**

(22) Date of filing: **25.05.2023**

(51) International Patent Classification (IPC):
***B60C 1/00*** *(2006.01)* ***C08L 9/06*** *(2006.01)*

(52) Cooperative Patent Classification (CPC):
(C-Sets available)
**C08L 9/06; B60C 1/0016;** Y02T 10/86 (Cont.)

(54) **TIRE**

REIFEN

PNEUMATIQUES

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **24.06.2022 JP 2022101537**

(43) Date of publication of application:
**27.12.2023 Bulletin 2023/52**

(73) Proprietor: **Sumitomo Rubber Industries, Ltd.
Kobe-shi, Hyogo 651-0072 (JP)**

(72) Inventors:
- **YAMADA, Ayuko
Kobe-shi, 651-0072 (JP)**
- **NAKAMURA, Kentaro
Kobe-shi, 651-0072 (JP)**

(74) Representative: **Manitz Finsterwald
Patent- und Rechtsanwaltspartnerschaft mbB
Martin-Greif-Strasse 1
80336 München (DE)**

(56) References cited:
**WO-A1-2022/025006 WO-A1-2022/074932**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



**(Cont. next page)**

(52) Cooperative Patent Classification (CPC): (Cont.)

C-Sets
**C08L 9/06, C08L 7/00, C08K 3/36, C08K 3/04;**
**C08L 9/06, C08L 9/00, C08K 3/36, C08K 3/04**

## Description

[TECHNICAL FIELD]

The present invention relates to tires.

[BACKGROUND ART]

In recent years, from the viewpoint of growing interest in environmental issues and economic efficiency, there has been a strong demand for lower fuel consumption of automobiles. In order to reduce the fuel consumption of automobiles, there is a strong demand for tires mounted on automobiles to have low rolling resistance during running, that is, to improve rolling resistance. Various techniques have been proposed for improving rolling resistance (for example, Patent documents 1 to 4). Further, Patent document 5, referring to tires in which fuel efficiency and pinch cut resistance are improved in a well-balanced manner, discloses tires comprising a tread, wherein the tread comprises at least one rubber layer of a rubber composition comprising a rubber component such as butadiene rubber and styrene-butadiene rubber having a styrene content of 25% by mass, a filler and a silane coupling agent, wherein when the rubber layer is constituted by two or more layers, at least one of the two or more rubber layers is used for a cap rubber layer (first rubber layer).

[Prior art documents]

[Patent document]

[Patent document 1] WO2015/159538
[Patent document 2] JP-2018-103931 A
[Patent document 3] JP-2019-084961 A
[Patent document 4] JP-2020-066394 A
[Patent document 5] WO 2022 / 074 932 A1

[SUMMARY OF INVENTION]

[PROBLEM TO BE SOLVED BY THE INVENTION]

However, the tire manufactured based on the above-described conventional technology is still insufficient in rolling resistance at start-up, and there is an increasing demand for improvement in rolling resistance at start-up.

Accordingly, an object of the present invention is to improve the rolling resistance at the time of starting.

[MEANS FOR SOLVING THE PROBLEM]

The present invention is

a tire having a tread portion, wherein
the cap rubber layer forming the tread portion is formed from a rubber composition containing 60 parts by mass or more and 80 parts by mass or less of styrene-butadiene rubber (SBR) having a styrene content of 20% by mass or less in 100 parts by mass of the rubber component, and containing 100 parts by mass or less of silica with respect to 100 parts by mass of the rubber component, whose loss tangent (30°C tan $\delta$) measured in deformation mode: tensile under the conditions of temperature of 30°C, frequency of 10 Hz, initial strain of 5%, and dynamic strain rate of 1% is 0.25 or less; and
the thickness of the tread portion is 6 mm or more and 12 mm or less.

[EFFECT OF THE INVENTION]

According to this invention, it is possible to improve the rolling resistance at the time of starting.

[EMBODIMENTS FOR CARRYING OUT THE INVENTION]

[1] Features of the tire according to the present invention

First, the features of the tire according to the present invention will be explained.

1. Overview

The tire according to the present invention is a tire having a tread portion, wherein the cap rubber layer forming the tread portion is formed from a rubber composition containing 60 parts by mass or more and 80 parts by mass or less of styrene-butadiene rubber (SBR) having a styrene content of 20% by mass or less in 100 parts by mass of the rubber component, and containing 100 parts by mass or less of silica with respect to 100 parts by mass of the rubber component, whose loss tangent (30°C tan $\delta$) measured in deformation mode: tensile under the conditions of temperature of 30°C, frequency of 10 Hz, initial strain of 5%, and dynamic strain rate of 1% is 0.25 or less. In addition, the thickness of the tread portion is 6 mm or more and 12 mm or less.

Here, the tread portion is a member in the region forming the ground contact surface of the tire, and refers to the portion radially outer side of members having fiber materials such as the carcass, belt layer, and belt reinforcing layer. The cap rubber layer refers to a rubber layer provided radially outward of the tire, but is not limited to the rubber layer forming the outermost layer of the tread portion. When there are two or more layers within 5mm from the tread surface toward the inside, at least any one layer may satisfy the requirements of the rubber composition.

By having these features, as will be described later, it is possible to improve the rolling resistance at the time of starting.

2. Mechanism of effect manifestation in tire according to the present invention

The mechanism of effect manifestation in the tire according to the present invention is considered as follows.

As described above, the cap rubber layer of the tire according to the present invention is formed from a rubber composition which contains 60 parts by mass or more and 80 parts by mass or less of SBR having a styrene content of 20% by mass or less in 100 parts by mass of the rubber component, and contains 100 parts by mass or less of silica with respect to 100 parts by mass of the rubber component.

By forming the cap rubber layer from a rubber composition of small styrene content, specifically, from a rubber composition containing 60 parts by mass or more and 80 parts by mass or less of SBR with a styrene content of 20% by mass or less in 100 parts by mass of the rubber component, a phase-separated structure in which the SBR is a continuous phase is formed in the rubber matrix, and it is considered that force can be easily transmitted within the phase.

The above styrene content is more preferably 15% by mass or less. On the other hand, as the lower limit, it is preferably 4% by mass or more, more preferably 5% by mass or more, and further preferably 6% by mass or more.

In the present invention, the phrase "contains 60 parts by mass or more and 80 parts by mass or less of SBR having a styrene content of 20% by mass or less in 100 parts by mass of the rubber component" indicates that the amount of SBR in 100 parts by mass of the rubber component is 60 parts by mass or more and 80 parts by mass or less, and the styrene content in the entire SBR is 20% by mass or less.

That is, when a styrene-containing polymer (SBR) is contained alone in the rubber component, it indicates that the styrene content in the polymer is 20% by mass or less, and when multiple styrene-containing polymers (SBR) are contained in the rubber component, it shows that the styrene content obtained from the sum of the product of the styrene content (mass%) in each polymer and the compounding amount (mass parts) per 100 mass parts of the rubber component of the polymer is 20 mass% or less.

More specifically, when 100 parts by mass of the rubber component contains SBR1 (X1 parts by mass) having a styrene content of S1 mass% and SBR2 (X2 parts by mass) having a styrene content of S2 mass%, it is indicated that the styrene content calculated from the formula $\{(S1 \times X1) + (S2 \times X2)\} / (X1 + X2)$ is 20% by mass or less.

In addition, in the vulcanized rubber composition, it can be calculated by determining the amount of styrene contained in the rubber component after acetone extraction by solid-state nuclear magnetic resonance (solid-state NMR) or Fourier transform infrared spectrophotometer (FTIR).

In addition, in the cap rubber layer of the tire according to the present invention, the content of silica is set to 100 parts by mass or less with respect to 100 parts by mass of the rubber component, which does not exceed the amount of the rubber component, so silica is easily dispersed uniformly. As a result, it is considered that the rubber component interacts with silica, making it easier to obtain force from the road surface and rolling resistance at start-up is improved, coupled with the fact that the amount of styrene is as small as 20% by mass or less. The content of silica is more preferably 90 parts by mass or less, and further preferably 80 parts by mass or less, with respect to 100 parts by mass of the rubber component. On the other hand, as the lower limit, it is preferably 60 parts by mass or more, and more preferably 70 parts by mass or more.

On the other hand, the presence of a small amount of styrene in the system can appropriately form fine styrene

domains derived from styrene moieties in the rubber matrix system. The minute styrene domains that are formed exhibit stickiness and a scratching effect, making it easier to transmit force to the road surface.

Furthermore, in the present invention, the loss tangent (30°C tan δ) measured in deformation mode: tensile under the conditions of temperature of 30°C, frequency of 10 Hz, initial strain of 5%, and dynamic strain rate of 1% is set to 0.25 or less.

The loss tangent tan δ is a viscoelastic parameter indicating energy absorption performance, and the larger the value, the more energy can be absorbed and converted into heat. In the present invention, the loss tangent (30°C tan δ) is as low as 0.25 or less, so that the input / response phase difference is reduced, the responsiveness is improved, and heat generation of the rubber composition can be suppressed. Note that tan δ at 30°C is more preferably 0.24 or less, more preferably 0.23 or less, further preferably 0.22 or less, further preferably 0.20 or less, further preferably 0.18 or less, further preferably 0.15 or less, further preferably 0.14 or less, and particularly preferably 0.13 or less. Although the lower limit is not particularly limited, it is preferably 0.05 or more, more preferably 0.07 or more, further preferably 0.10 or more, and further preferably 0.11 or more.

In the above, the loss tangent (tan δ) can be measured, for example, using a viscoelasticity measuring device such as "Eplexor (registered trademark)" series manufactured by GABO.

The method for adjusting tan δ is not particularly limited. It can be raised by methods such as increasing the amount of styrene in polymer, increasing the content of resin components, and increasing the content of carbon black. On the other hand, it can be lowered by methods such as reducing the amount of styrene in polymer, reducing the content of resin components, and reducing the content of carbon black.

Furthermore, in the tire according to the present invention, as described above, the thickness of the tread portion is 6 mm or more and 12 mm or less. By controlling the thickness to such an appropriate value, the transmission distance of the force received from the road surface in the tread portion is shortened, and the input / response phase difference can be further reduced. It is more preferably 7 mm or more and 10 mm or less, and further preferably 8 mm or more and 9 mm or less.

Here, the "thickness of the tread portion" refers to the thickness of the tread portion on the tire equatorial plane in the cross section in the tire radial direction. When the tread portion is formed of a single rubber composition, it refers to the thickness of the rubber composition, and in the case of a laminated structure of multiple rubber compositions, which will be described later, it refers to the total thickness of these layers.

When the tire has a groove on the equatorial plane, it refers to the thickness from the intersection of a straight line connecting the radially outermost end points of the groove with the tire equatorial plane to the radially innermost interface of the tread portion.

The thickness of the tread portion can be measured by aligning the bead portion with the standardized rim width in a cross section obtained by cutting the tire in the radial direction.

The "standardized rim" described above is a rim defined for each tire in the standard system including the standard on which the tire is based. For example, in the case of JATMA (Japan Automobile Tire Association), it is the standard rim in applicable sizes described in the "JATMA YEAR BOOK", in the case of "ETRTO (The European Tire and Rim Technical Organization)", it is "Measuring Rim" described in "STANDARDS MANUAL", and in the case of TRA (The Tire and Rim Association, Inc.), it is "Design Rim" described in "YEAR BOOK". JATMA, ETRTO, and TRA are referred to in that order, and if there is an applicable size at the time of reference, that standard is followed. In the case of tires that are not specified in the standard, it refers a rim that can be assembled and can maintain internal pressure, that is, the rim that does not cause air leakage from between the rim and the tire, and has the smallest rim diameter, and then the narrowest rim width.

As described above, in the tire according to the present invention, the rubber composition forming the cap rubber layer easily transmits force due to the styrene domains on the surface, and the continuous phase in which silica is dispersed facilitates the transmission of force inside the rubber. In addition, since the tan δ of the rubber is small and the force transmission distance (thickness of the tread: gauge) is short, it becomes a state where good responsiveness can be easily obtained. As a result, it is considered that it becomes easier for force to be transmitted to the road surface at start-up and the rolling resistance at start-up improves.

[2] A more preferred embodiment of the tire according to the present invention

The tire according to the present invention can obtain even greater effects by adopting the following embodiments.

1. Glass transition temperature (Tg) of cap rubber layer

In the present invention, the glass transition temperature (Tg) of the cap rubber layer is preferably -9.5°C or lower, more preferably -10°C or lower, further preferably -15.9°C or lower, further preferably -25.1°C or lower, further preferably

-26.3°C or lower, further preferably -28.7°C or lower, further preferably -29.4°C or lower, and further preferably -30°C or lower. When the glass transition temperature (Tg) is -10°C or lower, the rubber becomes soft at room temperature, which is the running temperature, and easily transmits force to the road surface, thereby improving rolling resistance at the time of starting. Although the lower limit of Tg is not particularly limited, it is preferably -60°C or higher, more preferably -50°C or higher, further preferably -40.5°C or higher, further preferably -40.4°C or higher, further preferably -37.3°C or higher, further preferably -36.2°C or higher, and further preferably -34.3°C or higher.

The glass transition temperature (Tg) of the rubber composition described above can be obtained from the temperature distribution curve of tan δ measured using a viscoelasticity measuring device such as "Eplexor (registered trademark)" series manufactured by GABO. Specifically, the temperature distribution curve of tan δ is measured under the conditions of frequency of 10 Hz, initial strain of 10%, amplitude of ±0.5%, and temperature increase rate of 2°C/min, and the temperature corresponding to the largest tan δ value within the range of -60°C or higher and 40°C or lower in the measured temperature distribution curve is defined as the glass transition temperature (Tg). If there are two or more points with the largest tan δ value within the range of -60°C or higher and 40°C or lower, the point with the lowest temperature is taken as Tg. For example, in the present invention, if the largest tan δ value is in the range of -60°C or higher and 40°C or lower, the temperature showing the largest value is the glass transition temperature (Tg) according to the above definition. In addition, when a temperature distribution curve where the temperature showing the largest tan δ value is -60°C is obtained, for example, in a case where the tan δ gradually decreases as temperature rises within the range of -60°C or higher and 40°C or lower, the glass transition temperature (Tg) is -60°C by the definition above.

2. Relationship between the complex elastic modulus of the cap rubber layer and the thickness of the tread

The complex elastic modulus E* is a parameter that indicates the rigidity of the rubber layer. The smaller the complex elastic modulus of the cap rubber layer, the less rigid the rubber layer and the easier it is to transmit force to the road surface. It is considered that, as a result, rolling resistance at start-up is improved. Further, as described above, it is considered that reducing the thickness (gauge) of the tread improves the efficiency of transmission of force, thereby improving the rolling resistance at the time of starting.

Based on the above knowledge, the present inventor thought that there might be some relationship between the complex elastic modulus of the cap rubber layer and the thickness of the tread, and conducted investigations. As a result, the present inventor thought that when complex elastic modulus of cap rubber layer 30°C E* (MPa) measured under the conditions of temperature of 30°C, frequency of 10Hz, initial strain of 5%, dynamic strain rate of 1%, deformation mode: elongation and tread thickness G (mm) satisfy the following formula, the force can be transmitted more efficiently, and the rolling resistance at the time of starting can be further improved.

$$30℃E^{*} \times G \leqq 80$$

The (30°C E * x G) is more preferably 73.7 or less, further preferably 60 or less, further preferably 59.1 or less, further preferably 59.0 or less, further preferably 58.7 or less, further preferably 56.5 or less, further preferably 54.8 or less, further preferably 53.8 or less, further preferably 50.9 or less, further preferably 48.0 or less, further preferably 46.4 or less, further preferably 44.0 or less, further preferably 42.5 or less, further preferably 41.8 or less, further preferably 40 or less, and further preferably 39.4 or less. Although the lower limit is not particularly limited, it is 35, for example.

The specific 30°C E* (MPa) is preferably 8.00 MPa or less, more preferably 7.8 MPa or less, further preferably 7.1 MPa or less, further preferably 7.00 MPa or less, further preferably 6.6 MPa or less, further preferably 6.4 MPa or less, further preferably 6.2 MPa or less, further preferably 6.00 MPa or less, further preferably 5.7 MPa or less, further preferably 5.4 MPa or less, further preferably 5.3 MPa or less, further preferably 5.1 MPa or less, further preferably 5.0 MPa or less, and further preferably 4.0 MPa or less.

The above-described complex elastic modulus can be measured, for example, using a viscoelasticity measuring device such as "Eplexor (registered trademark)" manufactured by GABO

3. Multi-layered tread portion

In the present invention, the tread portion may be formed of only one layer of the cap rubber layer provided on the outer side in the tire radial direction, or may be formed of two layers by providing the base rubber layer on the inner side of the cap rubber layer in the tire radial direction. In addition, it may have three layers, four layers or more. In this case, the thickness of the cap rubber layer in the entire tread portion is preferably 10% or more. As a result, the energy generated between the surface of the tread portion and the road surface can be sufficiently transmitted, so it is considered that the rolling resistance at the time of starting can be further improved. The thickness of the cap rubber layer in the entire tread portion is more preferably 70% or more.

The thickness of the cap rubber layer and the thickness of the base rubber layer can be calculated by totaling the thickness of the cap rubber layer and the thickness of the base rubber layer in the thickness of the tread portion, as described-above.

Here, the "thickness of the cap rubber layer" refers to the thickness of the cap rubber layer on the tire equatorial plane in the tire radial cross section. In case the tire has a groove on the equatorial plane, it refers to the thickness from the intersection of the straight line connecting the radially outermost endpoints of the groove and the tire equatorial plane to the interface with the innermost base rubber layer of the tread portion in the radial direction of the tire. The "thickness of the base rubber layer" refers to the thickness from the interface with the cap rubber layer to the innermost interface in the tire radial direction of the tread portion.

The thickness of the cap rubber layer and the thickness of the base rubber layer can be calculated by obtaining the thickness of the cap rubber layer and the thickness of the base rubber layer in the thickness of the tread portion, as described-above. When a groove exists on the tire equatorial plane, it can be obtained by calculating the thickness of the cap rubber layer and the thickness of the base rubber layer at the center of the land portion of the tread portion closest to the equatorial plane.

In this case, the 30°C tan δ of the base rubber layer is preferably smaller than the 30°C tan δ of the cap rubber layer. As a result, the energy generated in the cap rubber layer is sufficiently transmitted, reducing the phase difference before the response inside the tire, improving responsiveness and further improving rolling resistance at start-up.

The tan δ at each temperature of the cap rubber layer and the base rubber layer can be appropriately adjusted depending on the amount and type of compounding materials described later. For example, the tan δ can be raised by increasing the content of styrene in the rubber component, increasing the content of SBR in the rubber component, increasing the content of styrene in the SBR component, increasing the content of fillers such as silica and carbon black, and increasing the content of the resin component. Conversely, it can be lowered by reducing the content of styrene in the rubber component, reducing the content of SBR in the rubber component, reducing the content of styrene in the SBR component, reducing the content of fillers such as silica and carbon black, and reducing the content of the resin component.

In the case of the multi-layered tread portion, the complex elastic modulus (30°C E*) of the base rubber layer measured under the conditions of temperature of 30°C, frequency of 10Hz, initial strain of 5%, dynamic strain rate of 1%, and the deformation mode: elongation is preferably smaller than the similarly measured 30°C E* of the cap rubber layer.

4. Particle size of silica

In the present invention, the particle size (average primary particle size) of silica is preferably 17 nm or less, considering the ease of friction with the polymer.

The average primary particle size is obtained by directly observing silica extracted from the rubber composition cut out from the tire using an electron microscope (TEM) or the like, calculating the equal cross-sectional area diameter from the area of each silica particle thus obtained, and calculating the average value.

5. Containing a resin component in the cap rubber layer

In the present invention, the rubber composition forming the cap rubber layer preferably contains a resin component.

When the resin component is contained in the rubber composition, the adhesion to the road surface is improved due to the adhesiveness of the resin component, and it is considered that rolling resistance at start-up can be further improved.

Examples of the preferred resin components include rosin-based resins, styrene-based resins, coumarone-based resins, terpene-based resins, C5 resins, C9 resins, C5C9 resins, and acrylic resins, which will be described later. Among these, a styrene-based resin such as α-methylstyrene is more preferred. The content with respect to 100 parts by mass of the rubber component is preferably is preferably 10 parts by mass or more, more preferably 20 parts by mass or more, further preferably 30 parts by mass or more, further preferably 50 parts by mass or more, and further preferably 60 parts by mass or more.

6. Acetone extractable content of cap rubber layer (AE)

In the present invention, the acetone-extractable content (AE) of the cap rubber layer is preferably 13% by mass or more, more preferably 19% by mass or more, and further preferably 25% by mass or more. On the other hand, although the upper limit is not particularly limited, it is preferably 34% by mass or less, more preferably 32% by mass or less, and further preferably 30% by mass or less.

The acetone extractables (AE) can be considered as an index indicating the amounts of softening agents and the

like in the rubber composition, and can also be considered as an index indicating the softness of the rubber composition. It is considered that, by making it 13% by mass or more, a sufficient area of contact between the tire and the road surface can be ensured, and the rolling resistance at the time of starting can be further improved.

Note that the acetone extractable content (AE) can be measured in accordance with JIS K 6229:2015. Specifically, AE (% by mass) can be obtained by immersing a vulcanized rubber test piece cut out from the measurement site in acetone for a predetermined time and determining the mass reduction rate (%) of the test piece.

More specifically, each vulcanized rubber test piece is immersed in acetone at room temperature and normal pressure for 72 hours to extract soluble components; the mass of each test piece before and after extraction is measured; and the acetone extraction amount can be calculated by the following formula.

Acetone extraction amount (%) = {(mass of rubber test piece before extraction - mass of rubber test piece after extraction) / (mass of rubber test piece before extraction)} × 100

Moreover, the above-mentioned acetone extraction amount can be appropriately changed by changing the compounding ratio of the plasticizer in the rubber composition.

7. Land ratio

In the tire according to the present invention, the land ratio in the tread portion of the tire installed on a standardized rim and having a standardized internal pressure is preferably 55% or more, and more preferably 60% or more.

"Land ratio" is the ratio of the actual contact area to the virtual contact area in which all the grooves on the surface of the tread are filled. It is considered that, when the land ratio is large, since the contact area with the road surface becomes large, the rolling resistance at start-up can be further improved.

Although the upper limit of the land ratio is not particularly limited, it is preferably 85% or less, more preferably 80% or less, and further preferably 75% or less.

The above land ratio can be obtained from the ground contact shape under the conditions of standardized rim, standardized internal pressure, and standardized load.

Specifically, the tire is installed on a standardized rim, a standardized internal pressure is applied, and the tire is allowed to stand at 25°C for 24 hours. Thereafter, an ink is printed on the tire tread surface, a standardized load is applied and then the tire tread surface is pressed against a thick paper (camber angle is 0°) to transfer the ink to the paper. Thus, the contact shape can be obtained. The transfer is made at five locations by rotating the tire by 72° in the circumferential direction. That is, the ground contact shape is obtained five times. At this time, for each of the five ground contact shapes, the discontinuous portions with the grooves of the contour are smoothly connected, and the resulting shape is defined as a virtual contact surface.

Then, the land ratio can be obtained from (average area of the five ground contact shapes (black portions) transferred to the thick paper / average of the areas of virtual contact surfaces obtained from the five ground contact shapes) × 100 (%).

Note that, the "standardized internal pressure" is the air pressure specified for each tire by the above-mentioned standards, and is the maximum air pressure for JATMA, "INFLATION PRESSURE" for ETRTO, and the maximum value described in the table "TIRE LOAD LIMITS AT VARIOUS COLD INFLATION PRESSURES" for TRA. As in the case of "standardized rim", refer to JATMA, ETRTO, and TRA in that order, and their standards are followed. And, in the case of a tire that is not defined in the standard, it is the standardized internal pressure (however, 250 kPa or more) of another tire size (specified in the standard) for which the standardized rim is described as the standard rim. When a plurality of standardized internal pressures of 250 kPa or more are listed, the minimum value among them is referred.

In addition, the "standardized load" is the load defined for each tire by the standards in the standard system including the standard on which the tire is base and refers to the maximum mass that can be loaded on the tire, and is the maximum load capacity for JATMA, "LOAD CAPACITY" for ETRTO, and the maximum value described in "TIRE LOAD LIMITS AT VA RIOUS COLD INFLATION PRESSURES" for TRA. As in the case of "standardized internal pressure", JATMA, ETRTO, and TRA are referred to in that order, and their standards are followed. Then, in the case of a tire not specified in the standard, the standardized load WL is obtained by the following calculation.

$$V = \{(Dt/2)^2 - (Dt/2 - Ht)^2\} \times \pi \times Wt$$

$$W_L = 0.000011 \times V + 175$$

$W_L$: standardized load (kg)
V: virtual volume of tire ($mm^3$)
Dt: tire outer diameter Dt (mm)
Ht: tire section height (mm)
Wt: cross-sectional width of tire (mm)

As described above, the rolling resistance at the time of starting can be improved by increasing the land ratio. It was found that the effects of the styrene domain network work together and the rolling resistance at start-up can be further improved, when, instead of simply increasing the land ratio, the content of SBR having a styrene content of 20% by mass or less is increased and the ratio of the land ratio to the content of SBR having a styrene content of 20% by mass or less is suppressed to a predetermined value or less.

Specifically, [Land ratio (%)] / [Content (parts by mass) of SBR having a styrene content of 20 mass% or less in 100 masses of the rubber component] is preferably less than 1.5, more preferably 1.08 or less, and further preferably 0.81 or less.

8. Aspect ratio

As will be described later, the aspect ratio is the cross-sectional height to the tire cross-sectional width, and the smaller this ratio, the smaller the ratio of the portion that deforms in the tire width direction against the friction obtained in the tread portion, and it is considered that it becomes easier to transmit the more force, and the rolling resistance at the time of starting can be further improved. On the other hand, when the aspect ratio is low, the amount of deflection at the side portions is small, which may lead to deterioration in ride comfort performance.

Considering these points, the specific aspect ratio of the tire according to the present invention is preferably 30% or more and 60% or less.

In addition, the product of the aspect ratio and the content (parts by mass) of the filler with respect to 100 parts by mass of the rubber component, [Aspect ratio (%)] × [Content of the filler (parts by mass)], is preferably 7500 or less, more preferably less than 7500, further preferably 5500 or less, further preferably 4950 or less, further preferably 4400 or less, further preferably 3850 or less, and further preferably 3300 or less. Although the lower limit is not particularly limited, it is, for example, 2000 or more. As a result, the effects of the network of the filler work together to further improve the off-road performance.

Note that the above aspect ratio (%) can be obtained by the following formula based on the cross-sectional height Ht (mm), the cross-sectional width Wt (mm), the tire outer diameter Dt (mm), and the rim diameter R (mm) when the internal pressure is 250 kPa.

$$\text{Aspect ratio (\%)} = (\text{Ht} / \text{Wt}) \times 100\ (\%)$$

$$\text{Ht} = (\text{Dt} - \text{R}) / 2$$

[3] Embodiment

The present invention will be specifically described below based on embodiments.

1. Rubber composition forming cap layer

In the tire according to the present invention, the rubber composition forming the cap rubber layer can be obtained by appropriately adjusting the types and amounts of various compounding materials such as the rubber component, filler, softening agent, vulcanizing agent, and vulcanization accelerator described below.

(1) Compounding material

(a) Rubber component

The rubber component is not particularly limited, and rubbers (polymers) commonly used in the manufacture of tires can be used. Examples of the rubbers include diene rubbers such as isoprene based rubber, butadiene rubber (BR), styrene butadiene rubber (SBR), and nitrile rubber (NBR); butyl based rubber such as butyl rubber; and thermoplastic elastomers such as styrene butadiene styrene block copolymer(SBS) and styrene-butadiene block copolymer (SB).

In the present invention, among these, from the point of containing styrene in the rubber component, any one of styrene-based polymers such as SBR, SBS and SB is preferably contained, and more preferably SBR is contained. These styrene-based polymers may be used in combination with other rubber components, and for example, combination of SBR and BR, and combination of SBR, BR and isoprene rubber are preferred.

(a-1) SBR

The weight average molecular weight of SBR is, for example, more than 100,000 and less than 2,000,000. Further, in the present invention, as described above, the amount of styrene in the SBR component is set to 20% by mass or less. The vinyl content (1,2-bonded butadiene content) of SBR is, for example, more than 5% by mass and less than 70% by mass. The vinyl content of SBR refers to the content of 1,2-bonded butadiene with respect to the entire butadiene portion in the SBR component. Further, structural identification of SBR (measurement of styrene content and vinyl content) can be performed using, for example, JNM-ECA series equipment manufactured by JEOL Ltd.

In the present invention, the content of SBR in 100 parts by mass of the rubber component is, as described above, 60 parts by mass or more and 80 parts by mass or less, and more preferably 65 parts by mass or more and 75 parts by mass or less. In the case of oil-extended SBR, the amount of pure rubber excluding the amount of oil-extended oil is the content of SBR.

The SBR is not particularly limited, and for example, emulsion-polymerized styrene-butadiene rubber (E-SBR), solution-polymerized styrene-butadiene rubber (S-SBR) and the like can be used. The SBR may be either a non-modified SBR or a modified SBR. In addition, hydrogenated SBR obtained by hydrogenating the butadiene portion of SBR may be used. Hydrogenated SBR may be obtained by subsequently hydrogenating the BR portion of SBR. Styrene, ethylene and butadiene may be copolymerized to give similar structures.

The modified SBR may be any SBR having a functional group that interacts with a filler such as silica. Examples thereof include

end-modified SBR (end-modified SBR having the above functional group at the terminal) in which at least one end of the SBR is modified with a compound having the above functional group (modifying agent),
main chain modified SBR having the functional group in the main chain,
main chain terminal modified SBR having the functional group at the main chain and the terminal (for example, a main chain end modified SBR having the above functional group to the main chain and having at least one end modified with the above modifying agent), and
end-modified SBR which is modified (coupled) with a polyfunctional compound having two or more epoxy groups in the molecule, and into which an epoxy group or hydroxyl group has been introduced.

Examples of the functional group include an amino group, an amide group, a silyl group, an alkoxysilyl group, an isocyanate group, an imino group, an imidazole group, a urea group, an ether group, a carbonyl group, an oxycarbonyl group, a mercapto group, a sulfide group, a disulfide group, a sulfonyl group, a sulfinyl group, a thiocarbonyl group, an ammonium group, an imide group, a hydrazo group, an azo group, a diazo group, a carboxyl group, a nitrile group, a pyridyl group, an alkoxy group, a hydroxyl group, an oxy group, and an epoxy group. In addition, these functional groups may have a substituent.

Further, as the modified SBR, for example, an SBR modified with a compound (modifying agent) represented by the following formula can be used.

[Chemical 1]

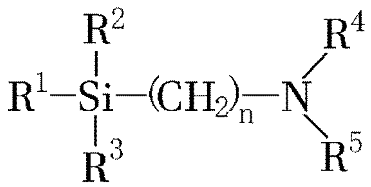

In the formula, $R^1$, $R^2$ and $R^3$ are the same or different and represent alkyl group, alkoxy group, silyloxy group, acetal group, carboxyl group (-COOH), mercapto group (-SH) or derivatives thereof. $R^4$ and $R^5$ are the same or different and represent hydrogen atoms or alkyl group. $R^4$ and $R^5$ may be combined to form a ring structure with nitrogen atoms. n represents an integer.

As the modified SBR modified by the compound (modifying agent) represented by the above formula, SBR, in

which the polymerization end (active end) of the solution-polymerized styrene-butadiene rubber (S-SBR) is modified by the compound represented by the above formula (for example, modified SBR described in JP-A-2010-111753), can be used.

As $R^1$, $R^2$ and $R^3$, an alkoxy group is suitable (preferably an alkoxy group having 1 to 8 carbon atoms, more preferably an alkoxy group having 1 to 4 carbon atoms). As $R^4$ and $R^5$, an alkyl group (preferably an alkyl group having 1 to 3 carbon atoms) is suitable. n is preferably 1 to 5, more preferably 2 to 4, and even more preferably 3. Further, when $R^4$ and $R^5$ are combined to form a ring structure together with a nitrogen atom, a 4- to 8-membered ring is preferable. The alkoxy group also includes a cycloalkoxy group (cyclohexyloxy group, and the like) and an aryloxy group (phenoxy group, benzyloxy group, and the like).

Specific examples of the above modifying agent include 2-dimethylaminoethyltrimethoxysilane, 3-dimethylaminopropyltrimethoxysilane, 2-dimethylaminoethyltriethoxysilane, 3-dimethylaminopropyltriethoxysilane, 2-diethylaminoethyltrimethoxysilane, 3-diethylaminopropyltrimethoxysilane, 2-diethylaminoethyltriethoxysilane, and 3-diethylaminopropyltriethoxysilane. These may be used alone or in combination of two or more.

Further, as the modified SBR, a modified SBR modified with the following compound (modifying agent) can also be used. Examples of the modifying agent include

polyglycidyl ethers of polyhydric alcohols such as ethylene glycol diglycidyl ether, glycerin triglycidyl ether, trimethylolethanetriglycidyl ether, and trimethylolpropane triglycidyl ether;
polyglycidyl ethers of aromatic compounds having two or more phenol groups such as diglycidylated bisphenol A;
polyepoxy compounds such as 1,4-diglycidylbenzene, 1,3,5-triglycidylbenzene, and polyepoxidized liquid polybutadiene;
epoxy group-containing tertiary amines such as 4,4' -diglycidyl-diphenylmethylamine, and 4,4'-diglycidyl-dibenzylmethylamine;
diglycidylamino compounds such as diglycidylaniline, N, N'-diglycidyl-4-glycidyloxyaniline, diglycidyl orthotoluidine, tetraglycidylmetaxylenidiamine, tetraglycidylaminodiphenylmethane, tetraglycidyl-p-phenylenediamine, diglycidylaminomethylcyclohexane, and tetraglycidyl-1,3-bisaminomethylcyclohexane;

amino group-containing acid chlorides such as bis- (1-methylpropyl) carbamate chloride, 4-morpholincarbonyl chloride, 1-pyrrolidincarbonyl chloride, N, N-dimethylcarbamide acid chloride, and N, N-diethylcarbamide acid chloride;
epoxy group-containing silane compounds such as 1,3-bis-(glycidyloxypropyl) -tetramethyldisiloxane, and (3-glycidyloxypropyl) - pentamethyldisiloxane;
sulfide group-containing silane compound such as (trimethylsilyl) [3-(trimethoxysilyl) propyl] sulfide, (trimethylsilyl) [3- (triethoxysilyl) propyl] sulfide, (trimethylsilyl) [3- (tripropoxysilyl) propyl] sulfide, (trimethylsilyl) [3-(tributoxysilyl) propyl] sulfide, (trimethylsilyl) [3-(methyldimethoxysilyl) propyl] sulfide, (trimethylsilyl) [3-(methyldiethoxysilyl) propyl] sulfide, (trimethylsilyl) [3-(methyldipropoxysilyl) propyl] sulfide, and (trimethylsilyl) [3-(methyldibutoxysilyl) propyl] sulfide;
N-substituted aziridine compound such as ethyleneimine and propyleneimine;
alkoxysilanes such as methyltriethoxysilane, N, N-bis (trimethylsilyl) -3-aminopropyltrimethoxysilane, N, N-bis (trimethylsilyl) - 3-aminopropyltriethoxysilane, N, N-bis (trimethylsilyl) aminoethyltrimethoxysilane, and N, N-bis (trimethylsilyl) aminoethyltriethoxysilane;
(thio) benzophenone compound having an amino group and/or a substituted amino group such as 4-N, N-dimethylaminobenzophenone, 4-N, N-di-t-butylaminobenzophenone, 4-N, N-diphenylamino benzophenone, 4,4'-bis (dimethylamino) benzophenone, 4,4'-bis (diethylamino) benzophenone, 4,4'-bis (diphenylamino) benzophenone, and N, N, N', N'-bis-(tetraethylamino) benzophenone;
benzaldehyde compounds having an amino group and/or a substituted amino group such as 4-N, N-dimethylaminobenzaldehyde, 4-N, N-diphenylaminobenzaldehyde, and 4-N, N-divinylamino benzaldehyde;
N-substituted pyroridone such as N-methyl-2-pyrrolidone, N-vinyl-2-pyrrolidone, N-phenyl-2-pyrrolidone, N-t-butyl-2-pyrrolidone, and N-methyl-5-methyl-2-pyrrolidone;
N- substituted piperidone such as methyl-2-piperidone, N-vinyl-2-piperidone, and N-phenyl-2-piperidone;
N-substituted lactams such as N-methyl -ε-caprolactam, N-phenyl-ε-caprolactum, N-methyl-ω-laurilolactum, N-vinyl-ω-laurilolactum, N-methyl-β-propiolactam, and N-phenyl-β-propiolactam; and
N, N-bis- (2,3-epoxypropoxy)-aniline, 4,4-methylene-bis- (N, N-glycidylaniline), tris- (2,3-epoxypropyl)-1,3,5-triazine-2,4,6-triones, N, N-diethylacetamide, N-methylmaleimide, N, N-diethylurea, 1,3-dimethylethylene urea, 1,3-divinylethyleneurea, 1,3-diethyl-2-imidazolidinone, 1-methyl-3-ethyl-2-imidazolidinone, 4-N, N-dimethylaminoacetophenone, 4-N, N-diethylaminoacetophenone, 1,3-bis (diphenylamino)-2-propanone, and 1,7 -bis(methylethylamino)-4-heptanone. The modification with the above compound (modifying agent) can be carried out by a known method.

As the SBR, for example, SBR manufactured and sold by Sumitomo Chemical Co., Ltd., ENEOS Material Co., Ltd., Asahi Kasei Co., Ltd., Zeon Co., Ltd., etc. can be used. The SBR may be used alone or in combination of two or more.

(a-2) BR

In the present invention, the rubber composition may contain BR. In this case, the content of BR in 100 parts by mass of the rubber component is preferably 20 parts by mass or more and 40 parts by mass or less, and more preferably 25 parts by mass or more and 35 parts by mass or less.

The weight average molecular weight of BR is, for example, more than 100,000 and less than 2,000,000. The vinyl bond amount of BR is, for example, more than 1% by mass and less than 30% by mass. The cis content of BR is, for example, more than 1% by mass and less than 98% by mass. The trans content of BR is, for example, more than 1% by mass and less than 60% by mass.

The BR is not particularly limited, and BR having a high cis content (cis content of 90% or more), BR having a low cis content, BR containing syndiotactic polybutadiene crystals, and the like can be used. The BR may be either a non-modified BR or a modified BR, and examples of the modified BR include a modified BR into which the above-mentioned functional group has been introduced. These may be used alone or in combination of two or more. The cis content can be measured by infrared absorption spectrum analysis.

As the BR, for example, products of Ube Industries, Ltd., ENEOS Material Co., Ltd., Asahi Kasei Co., Ltd., and Nippon Zeon Co., Ltd., etc. can be used.

(a-3) Isoprene rubber

In the present invention, the rubber composition may contain an isoprene-based rubber, if necessary. In this case, the content of the isoprene-based rubber in 100 parts by mass of the rubber component is preferably 10 parts by mass or more and 30 parts by mass or less, and more preferably 15 parts by mass or more and 25 parts by mass or less.

Examples of the isoprene-based rubber include natural rubber (NR), isoprene rubber (IR), reformed NR, modified NR, and modified IR.

As the NR, for example, SIR20, RSS # 3, TSR20, SVR-L, and the like, which are commonly used in the tire industry, can be used. The IR is not particularly limited, and for example, IR 2200 or the like, which is commonly used in the tire industry, can be used. Reformed NR includes deproteinized natural rubber (DPNR), high-purity natural rubber (UPNR), etc., and modified NR includes epoxidized natural rubber (ENR), hydrogenated natural rubber (HNR), grafted natural rubber, etc. Examples of the modified IR include epoxidized isoprene rubber, hydrogenated isoprene rubber, and grafted isoprene rubber. These may be used alone or in combination of two or more.

(a-4) Other rubber components

Further, as other rubber components, rubbers (polymers) generally used for manufacturing tires, such as nitrile rubber (NBR), may be contained.

(b) Compounding materials other than rubber components

(b-1) Filler

In the present invention, the rubber composition contains silica as a filler as described above, but may contain other fillers. Examples of specific fillers other than silica include carbon black, graphite, calcium carbonate, talc, alumina, clay, aluminum hydroxide, and mica.

(i-1) Silica

In the present invention, the BET specific surface area of silica contained in the rubber composition is preferably more than 140 $m^2/g$, and more preferably more than 160 $m^2/g$, from the viewpoint of obtaining good durability performance. On the other hand, it is preferably less than 250 $m^2/g$, and more preferably less than 220 $m^2/g$, from the viewpoint of obtaining good rolling resistance during high-speed running. The BET specific surface area mentioned above is the value of $N_2SA$ measured by the BET method according to ASTM D3037-93.

In the present invention, as described above, it is preferable to use silica having a particle size of 17 nm or less. By using silica having a small particle size, the frequency of contact with the polymer (styrene domain) is increased and the mobility of the polymer can be enhanced. It is considered that, as a result, responsiveness is improved and rolling resistance at start-up is further improved. Although the lower limit is not particularly limited, it is preferably 10 nm or more

from the viewpoint of dispersibility during mixing.

As described above, the content of silica is 100 parts by mass or less with respect to 100 parts by mass of the rubber component, and is an amount that does not exceed the rubber component, but it is preferably 90 parts by mass or less, more preferably 80 parts by mass or less, and further preferably 70 parts by mass or less. Although the lower limit is not particularly limited, it is preferably 50 parts by mass or more, and more preferably 60 parts by mass or more, in consideration of the reinforcing performance of silica.

Examples of silica include dry silica (anhydrous silica) and wet silica (hydrous silica). Among them, wet silica is preferable because it has large number of silanol groups. Silica made from water-containing glass or the like, or silica made from biomass materials such as rice husks may also be used.

As the silica, products of Evonik Industries, Rhodia Co., Ltd., Tosoh Silica Co., Ltd., Solvay Japan Co., Ltd., and Tokuyama Co., Ltd., etc. can be used.

(i-2) Silane coupling agent

The rubber composition forming the cap rubber layer of the present invention preferably contains a silane coupling agent together with silica.

The silane coupling agent is not particularly limited, and examples thereof include sulfide-based ones such as bis(3-triethoxysilylpropyl)tetrasulfide, bis (2-triethoxysilylethyl)tetrasulfide, bis (4-triethoxysilylbutyl)tetrasulfide, bis(3-trimethoxysilylpropyl) tetrasulfide, bis(2-trimethoxysilylethyl) tetrasulfide, bis(2-triethoxysilylethyl)trisulfide, bis(4-trimethoxysilylbutyl) trisulfide, bis (3-triethoxysilylpropyl) disulfide, bis(2-triethoxysilylethyl) disulfide, bis (4-triethoxysilylbutyl) disulfide, bis(3-trimethoxysilylpropyl) disulfide, bis(2-trimethoxysilylethyl)disulfide, bis(4-trimethoxysilylbutyl)disulfide, 3-trimethoxysilylpropyl-N, N-dimethylthiocarbamoyltetrasulfide, 2-triethoxysilylethyl-N, N-dimethylthiocarbamoyltetrasulfide, and 3-triethoxysilylpropylmethacrylatemonosulfide;

mercapto-based ones such as 3-mercaptopropyltrimethoxysilane, 2-mercaptoethyltriethoxysilane, and NXT and NXT-Z manufactured by Momentive;
vinyl-based ones such as vinyl triethoxysilane, and vinyl trimethoxysilane;
amino-based ones such as 3-aminopropyltriethoxysilane and 3-aminopropyltrimethoxysilane;
glycidoxy-based ones such as $\gamma$-glycidoxypropyltriethoxysilane and $\gamma$ - glycidoxypropyltrimethoxysilane;
nitro-based ones such as 3-nitropropyltrimethoxysilane, and 3-nitropropyltriethoxysilane; and
chloro-based ones such as 3-chloropropyltrimethoxysilane, and 3-chloropropyltriethoxysilane. These may be used alone or in combination of two or more.

As the specific silane coupling agent, for example, products of Evonik Industries, Momentive Co., Ltd., Shin-Etsu Silicone Co., Ltd., Tokyo Chemical Industry Co., Ltd., Azumax Co., Ltd., Toray Dow Corning Co., Ltd., etc. can be used.

The content of the silane coupling agent is, for example, more than 3 parts by mass and less than 25 parts by mass with respect to 100 parts by mass of silica.

(ii) Carbon black

In the present invention, the rubber composition preferably contains carbon black from the viewpoint of reinforcing properties.

A specific content ratio of carbon black to 100 parts by mass of the rubber component is preferably 2 parts by mass or more, and more preferably 4 parts by mass or more. On the other hand, it is preferably 10 parts by mass or less, and more preferably 6 parts by mass or less.

Carbon black is not particularly limited, and examples thereof include furnace black (furnace carbon black) such as SAF, ISAF, HAF, MAF, FEF, SRF, GPF, APF, FF, CF, SCF and ECF; acetylene black (acetylene carbon black); thermal blacks (thermal carbon blacks) such as FT and MT; channel blacks (channel carbon blacks) such as EPC, MPC and CC. They may be used individually by 1 type, and may use 2 or more types together.

The CTAB (Cetyl Tri-methyl Ammonium Bromide) specific surface area of carbon black is preferably 130 $m^2/g$ or more, more preferably 160 $m^2/g$ or more, and further preferably 170 $m^2/g$ or more. On the other hand, it is preferably 250 $m^2/g$ or less, and more preferably 200 $m^2/g$ or less. The CTAB specific surface area is a value measured according to ASTM D3765-92.

Specific carbon blacks are not particularly limited, and examples thereof include N134, N110, N220, N234, N219, N339, N330, N326, N351, N550, and N762. Commercially available products include, for example, products of Asahi Carbon Co., Ltd., Cabot Japan Co., Ltd., Tokai Carbon Co., Ltd., Mitsubishi Chemical Corporation, Lion Corporation, Shin Nikka Carbon Co., Ltd., Columbia Carbon Co., Ltd., etc. These may be used alone or in combination of two or more.

(iii) Other fillers

The rubber composition may further contain fillers such as graphite, calcium carbonate, talc, alumina, clay, aluminum hydroxide, and mica, which are generally used in the tire industry, in addition to the above-mentioned silica, silane coupling agent and carbon black, as necessary. These contents are, for example, more than 0.1 part by mass and less than 200 parts by mass with respect to 100 parts by mass of the rubber component.

(b-2) Plasticizer component

The rubber composition may contain oil (including extender oil), liquid rubber, and resin as plasticizer components as components for softening rubber. The plasticizer component is a component that can be extracted from the vulcanized rubber with acetone. The total content of the plasticizer component is preferably 30 parts by mass or more, more preferably 50 parts by mass or more, and further preferably 70 parts by mass or more with respect to 100 parts by mass of the rubber component. On the other hand, it is preferably 110 parts by mass or less, more preferably 100 parts by mass or less, and further preferably 90 parts by mass or less. When oil-extended rubber is used as the rubber component, the amount of oil-extended oil is also included in the oil content.

(i) Oil

Examples of the oil include mineral oils (commonly referred to as process oils), vegetable oils, or mixtures thereof. As the mineral oil (process oil), for example, a paraffinic process oil, an aroma-based process oil, a naphthene process oil, or the like can be used. Examples of the vegetable oils and fats include castor oil, cottonseed oil, linseed oil, rapeseed oil, soybean oil, palm oil, coconut oil, peanut oil, rosin, pine oil, pine tar, tall oil, corn oil, rice oil, beni-flower oil, sesame oil, olive oil, sunflower oil, palm kernel oil, camellia oil, jojoba oil, macadamia nut oil, and tung oil. These may be used alone or in combination of two or more. Moreover, from the viewpoint of life cycle assessment, waste oil after being used as a lubricating oil for mixers for rubber mixing, automobile engines, etc., waste cooking oil, and the like may be used as appropriate.

Specific examples of process oil (mineral oil) include products of Idemitsu Kosan Co., Ltd., Sankyo Yuka Kogyo Co., Ltd., ENEOS Corporation, Olisoy Co., Ltd., H&R Co., Ltd., Toyokuni Seiyu Co., Ltd., Showa Shell Sekiyu Co., Ltd., and Fuji Kosan Co., Ltd.

(ii) liquid rubber

The liquid rubber used as a plasticizer component is a polymer in a liquid state at room temperature (25°C) and is a polymer having a monomer similar to that of solid rubber as a constituent element. Examples of the liquid rubber include farnesene-based polymers, liquid diene-based polymers, and hydrogenated additives thereof.

The farnesene-based polymer is a polymer obtained by polymerizing farnesene, and has a structural unit based on farnesene. Farnesene includes isomers such as α-farnesene ((3E, 7E) -3,7,11-trimethyl-1,3,6,10-dodecatetraene) and β-farnesene (7,11-dimethyl-3-methylene-1, 6,10-dodecatorien).

The farnesene-based polymer may be a homopolymer of farnesene (farnesene homopolymer) or a copolymer of farnesene and a vinyl monomer (farnesene-vinyl monomer copolymer).

Examples of the liquid diene polymer include a liquid styrene-butadiene copolymer (liquid SBR), a liquid butadiene polymer (liquid BR), a liquid isoprene polymer (liquid IR), and a liquid styrene isoprene copolymer (liquid SIR).

The liquid diene polymer has a polystyrene-converted weight average molecular weight (Mw) measured by gel permeation chromatography (GPC) of, for example, more than $1.0 \times 10^3$ and less than $2.0 \times 10^5$. In the present specification, Mw of the liquid diene polymer is a polystyrene conversion value measured by gel permeation chromatography (GPC).

The content of the liquid rubber (the total content of the liquid farnesene-based polymer, the liquid diene-based polymer, etc.) is, for example, more than 1 part by mass and less than 100 parts by mass with respect to 100 parts by mass of the rubber component.

As the liquid rubber, for example, products of Kuraray Co., Ltd., Clay Valley Co., Ltd., etc. can be used.

(iii) Resin component

The resin component also functions as a tackifying component and may be solid or liquid at room temperature. Specific examples of the resin components include rosin-based resin, styrene-based resin, coumarone-based resin, terpene-based resin, C5 resin, C9 resin, C5C9 resin, and acrylic resins. Two or more of them may be used in combination. Content of the resin component is more than 2 parts by mass, preferably less than 45 parts by mass, and more preferably

less than 30 parts by mass with respect to 100 parts by mass of the rubber component. These resin components may optionally be provided with modified groups capable of reacting with silica or the like.

The rosin-based resin is a resin whose main component is rosin acid obtained by processing rosin. The rosin-based resins (rosins) can be classified according to the presence or absence of modification, and can be classified into unmodified rosin (non-modified rosin) and modified rosin (rosin derivative). Unmodified rosins include tall rosin (also known as tall oil rosin), gum rosin, wood rosin, disproportionated rosin, polymerized rosin, hydrogenated rosin, and other chemically modified rosins. The modified rosin is a modified compound of a unmodified rosin, and examples thereof include rosin esters, unsaturated carboxylic acid-modified rosins, unsaturated carboxylic acid-modified rosin esters, rosin amide compounds, and rosin amine salts.

The styrene resin is a polymer using a styrene monomer as a constituent monomer, and examples thereof include a polymer obtained by polymerizing a styrene monomer as a main component (50% by mass or more). Specifically, it includes homopolymers obtained by individually polymerizing styrene monomers (styrene, o-methylstyrene, m-methylstyrene, p-methylstyrene, α-methylstyrene, p-methoxystyrene, p-tert-butylstyrene, p-phenylstyrene, o-chlorostyrene, m-chlorostyrene, p-chlorostyrene, etc.), copolymers obtained by copolymerizing two or more styrene monomers, and, in addition, copolymers obtained by copolymerizing a styrene monomer and other monomers that can be copolymerized with the styrene monomer.

Examples of the other monomers include acrylonitriles such as acrylonitrile and methacrylonitrile; unsaturated carboxylic acids such as acrylic acid and methacrylic acid; unsaturated carboxylic acid esters such as methyl acrylate and methyl methacrylate; dienes such as chloroprene, butadiene, and isoprene, olefins such as 1-butene and 1-pentene; and α, β-unsaturated carboxylic acids and acid anhydrides thereof such as maleic anhydride.

Among the coumarone-based resin, coumarone-indene resin is preferably used. Coumarone-indene resin is a resin containing coumarone and indene as monomer components constituting the skeleton (main chain) of the resin. Examples of the monomer component contained in the skeleton other than coumarone and indene include styrene, α-methylstyrene, methylindene, and vinyltoluene.

The content of the coumarone-indene resin is, for example, more than 1.0 parts by mass and less than 50.0 parts by mass with respect to 100 parts by mass of the rubber component.

The hydroxyl value (OH value) of the coumarone-indene resin is, for example, more than 15 mgKOH/g and less than 150 mgKOH/g. The OH value is the amount of potassium hydroxide required to neutralize acetic acid bonded to a hydroxyl group when 1 g of the resin is acetylated, and is expressed in milligrams. It is a value measured by potentiometric titration method (JIS K 0070: 1992).

The softening point of the coumarone-indene resin is, for example, higher than 30 °C and lower than 160 °C. The softening point is the temperature at which the ball drops when the softening point defined in JIS K 6220-1: 2001 is measured by a ring-ball type softening point measuring device.

Examples of the terpene-based resins include polyterpenes, terpene phenols, and aromatic-modified terpene resins. Polyterpene is a resin obtained by polymerizing a terpene compound and a hydrogenated product thereof. The terpene compound is a hydrocarbon having a composition of $(C_5H_8)_n$ or an oxygen-containing derivative thereof, which is a compound having a terpene classified as monoterpenes ($C_{10}H_{16}$), sesquiterpenes ($C_{15}H_{24}$), diterpenes ($C_{20}H_{32}$), etc. as the basic skeleton. Examples thereof include α-pinene, β-pinene, dipentene, limonene, myrcene, alloocimene, osimene, α-phellandrene, α-terpinene, γ-terpinene, terpinolene, 1,8-cineol, 1,4-cineol, α-terpineol, β-terpineol, and γ-terpineol.

Examples of the polyterpene include terpene resins such as α-pinene resin, β-pinene resin, limonene resin, dipentene resin, and β-pinene/limonene resin, which are made from the above-mentioned terpene compound, as well as hydrogenated terpene resin obtained by hydrogenating the terpene resin. Examples of the terpene phenol include a resin obtained by copolymerizing the above-mentioned terpene compound and the phenol compound, and a resin obtained by hydrogenating above-mentioned resin. Specifically, a resin obtained by condensing the above-mentioned terpene compound, the phenol compound and formalin can be mentioned. Examples of the phenol compound include phenol, bisphenol A, cresol, and xylenol. Examples of the aromatic-modified terpene resin include a resin obtained by modifying a terpene resin with an aromatic compound, and a resin obtained by hydrogenating the above-mentioned resin. The aromatic compound is not particularly limited as long as it is a compound having an aromatic ring, and examples thereof include phenol compounds such as phenol, alkylphenol, alkoxyphenol, and unsaturated hydrocarbon group-containing phenol; naphthol compounds such as naphthol, alkylnaphthol, alkoxynaphthol, and unsaturated hydrocarbon group-containing naphthols; styrene derivatives such as styrene, alkylstyrene, alkoxystyrene, unsaturated hydrocarbon group-containing styrene; coumarone; and indene.

The "C5 resin" refers to a resin obtained by polymerizing a C5 fraction. Examples of the C5 fraction include petroleum fractions having 4 to 5 carbon atoms such as cyclopentadiene, pentene, pentadiene, and isoprene. As the C5 based petroleum resin, a dicyclopentadiene resin (DCPD resin) is preferably used.

The "C9 resin" refers to a resin obtained by polymerizing a C9 fraction, which may be hydrogenated or modified. Examples of the C9 fraction include petroleum fractions having 8 to 10 carbon atoms such as vinyltoluene, alkylstyrene,

indene, and methyl indene. As specific examples thereof, for example, a coumaron indene resin, a coumaron resin, an indene resin, and an aromatic vinyl resin are preferably used. As the aromatic vinyl resin, a homopolymer of $\alpha$-methylstyrene or styrene or a copolymer of $\alpha$-methylstyrene and styrene is preferable because it is economical, easy to process, and excellent in heat generation. A copolymer of $\alpha$-methylstyrene and styrene is more preferred. As the aromatic vinyl-based resin, for example, those commercially available from Kraton, Eastman Chemical, etc. can be used.

The "C5-C9 resin" refers to a resin obtained by copolymerizing the C5 fraction and the C9 fraction, which may be hydrogenated or modified. Examples of the C5 fraction and the C9 fraction include the above-mentioned petroleum fraction. As the C5-C9 resin, for example, those commercially available from Tosoh Corporation, LUHUA, etc. can be used.

Although the acrylic resin is not particularly limited, for example, a solvent-free acrylic resin can be used.

As the solvent-free acrylic resin, a (meth) acrylic resin (polymer) synthesized by a high-temperature continuous polymerization method (high-temperature continuous lump polymerization method (a method described in US 4414370 B, JP 84-6207 A, JP 93-58805 B, JP 89-313522 A, US 5010166 B, Toa Synthetic Research Annual Report TREND2000 No. 3 p42-45, and the like) without using polymerization initiators, chain transfer agents, organic solvents, etc. as auxiliary raw materials as much as possible, can be mentioned. In the present invention, (meth) acrylic means methacrylic and acrylic.

Examples of the monomer component constituting the acrylic resin include (meth) acrylic acid, and (meth) acrylic acid derivatives such as (meth) acrylic acid ester (alkyl ester, aryl ester, aralkyl ester, etc.), (meth) acrylamide, and (meth) acrylamide derivative.

In addition, as the monomer component constituting the acrylic resin, aromatic vinyl compounds such as styrene, $\alpha$-methylstyrene, vinyltoluene, vinylnaphthalene, divinylbenzene, trivinylbenzene, and divinylnaphthalene may be used, together with (meth) acrylic acid or (meth) acrylic acid derivative.

The acrylic resin may be a resin composed of only a (meth) acrylic component or a resin also having a component other than the (meth) acrylic component. Further, the acrylic resin may have a hydroxyl group, a carboxyl group, a silanol group, or the like.

Specifically, as the resin component, for example, a product of Maruzen Petrochemical Co., Ltd., Sumitomo Bakelite Co., Ltd., Yasuhara Chemical Co., Ltd., Toso Co., Ltd., Rutgers Chemicals Co., Ltd., BASF Co., Ltd., Arizona Chemical Co., Ltd., Nitto Chemical Co., Ltd., Co., Ltd., Nippon Catalyst Co., Ltd., ENEOS Co., Ltd., Arakawa Chemical Industry Co., Ltd., Taoka Chemical Industry Co., Ltd. can be used.

(b-3) Stearic acid

In the present invention, the rubber composition preferably contains stearic acid. Content of stearic acid is, for example, more than 0.5 parts by mass and less than 10.0 parts by mass with respect to 100 parts by mass of the rubber component. As the stearic acid, conventionally known ones can be used, and, for example, products of NOF Corporation, Kao Corporation, Fuji film Wako Pure Chemical Industries, Ltd., and Chiba Fatty Acid Co., Ltd., etc. can be used.

(b-4) Anti-aging agent

In the present invention, the rubber composition preferably contains an antioxidant. The content of the anti-aging agent is, for example, more than 0.5 parts by mass and less than 10 parts by mass, and more preferably 1 part by mass or more with respect to 100 parts by mass of the rubber component.

Examples of the antiaging agent include naphthylamine-based antiaging agents such as phenyl-$\alpha$-naphthylamine; diphenylamine-based antiaging agents such as octylated diphenylamine and 4,4'-bis ($\alpha$, $\alpha'$-dimethylbenzyl) diphenylamine; p-phenylenediamine-based anti-aging agent such as N-isopropyl-N'-phenyl-p-phenylenediamine, N-(1,3-dimethylbutyl)-N'-phenyl-p-phenylenediamine, and N,N'-di-2-naphthyl-p-phenylenediamine; quinoline-based anti-aging agent such as a polymer of 2,2,4-trimethyl-1,2-dihydroquinolin; monophenolic anti-aging agents such as 2,6-di-t-butyl-4-methylphenol, styrenated phenol; bis, tris, polyphenolic anti-aging agents such as tetrakis-[methylene-3-(3',5'-di-t-butyl-4'-hydroxyphenyl)propionate] methane. These may be used alone or in combination of two or more.

As the anti-aging agent, for example, products of Seiko Chemical Co., Ltd., Sumitomo Chemical Co., Ltd., Ouchi Shinko Chemical Industry Co., Ltd., Flexsys Co., Ltd., etc. can be used.

(b-5) Wax

In the present invention, the rubber composition preferably contains wax. The content of the wax is, for example, 0.5 to 20 parts by mass, preferably 1.0 to 15 parts by mass, and more preferably 1.5 to 10 parts by mass with respect to 100 parts by mass of the rubber component.

The wax is not particularly limited, and examples thereof include petroleum waxes such as paraffin wax and microcrystalline wax; natural waxes such as plant waxes and animal waxes; synthetic waxes such as polymers of ethylene and propylene. These may be used alone or in combination of two or more.

As the wax, for example, products of Ouchi Shinko Chemical Industry Co., Ltd., Nippon Seiro Co., Ltd., Seiko Chemical Co., Ltd., etc. can be used.

(b-6) Zinc oxide

The rubber composition may contain zinc oxide. Content of the zinc oxide is, for example, more than 0.5 parts by mass and less than 10 parts by mass with respect to 100 parts by mass of the rubber component. As the zinc oxide, conventionally known ones can be used, for example, products of Mitsui Mining & Smelting Co., Ltd., Toho Zinc Co., Ltd., Hakusui Tech Co., Ltd., Shodo Chemical Industry Co., Ltd., Sakai Chemical Industry Co., Ltd., etc. can be used.

(b-7) Cross-linking agent and vulcanization accelerator

The rubber composition preferably contains a cross-linking agent such as sulfur. The content of the cross-linking agent is, for example, more than 0.1 parts by mass and less than 10.0 parts by mass with respect to 100 parts by mass of the rubber component.
Examples of sulfur include powdered sulfur, precipitated sulfur, colloidal sulfur, insoluble sulfur, highly dispersible sulfur, and soluble sulfur, which are commonly used in the rubber industry. These may be used alone or in combination of two or more.
As the sulfur, for example, products of Tsurumi Chemical Industry Co., Ltd., Karuizawa Sulfur Co., Ltd., Shikoku Chemicals Corporation, Flexsys Co., Ltd., Nippon Kanryu Kogyo Co., Ltd., Hosoi Chemical Industry Co., Ltd., etc. can be used.
Examples of the cross-linking agent other than sulfur include vulcanizing agents containing a sulfur atom such as Tackirol V200 manufactured by Taoka Chemical Industry Co., Ltd., and KA9188 (1,6-bis (N, N'-dibenzylthiocarbamoyldithio) hexane) manufactured by Lanxess; and organic peroxides such as dicumyl peroxide.
The rubber composition preferably contains a vulcanization accelerator. The content of the vulcanization accelerator is, for example, more than 0.3 parts by mass and less than 10.0 parts by mass with respect to 100 parts by mass of the rubber component.
Examples of the vulcanization accelerator include

thiazole-based vulcanization accelerators such as 2-mercaptobenzothiazole, di-2-benzothiazolyl disulfide, and N-cyclohexyl-2-benzothiadylsulfenamide;
thiuram-based vulcanization accelerators such as tetramethylthiuram disulfide (TMTD), tetrabenzyltiuram disulfide (TBzTD), and tetrakis (2-ethylhexyl) thiuram disulfide (TOT-N);
sulfenamide-based vulcanization accelerators such as N-cyclohexyl-2-benzothiazolesulfenamide, N-t-butyl- 2-benzothiazolyl sulfenamide, N-oxyethylene-2-benzothiazolesulfenamide, and N,N'-diisopropyl-2-benzothiazolesulfenamide; and
guanidine-based vulcanization accelerators such as diphenylguanidine, di-ortho-tolylguanidine and ortho-tolylbiguanidine. These may be used alone or in combination of two or more.

(b-8) Others

In addition to the above components, the rubber composition may contain additives commonly used in the tire industry, such as fatty acid metal salts, carboxylic acid metal salts, organic peroxides, anti-reversion agents may be further contained, if desired. Content of these additives is, for example, more than 0.1 parts by mass and less than 200 parts by mass with respect to 100 parts by mass of the rubber component.

(2) Production of rubber composition

The rubber composition forming the cap rubber layer is prepared by appropriately adjusting the various compounding materials described above and performing a general method, for example, a manufacturing method having a base kneading step of kneading a rubber component and a filler such as carbon black, and a finish kneading step of kneading the kneaded product obtained in the base kneading step and a cross-linking agent.
Kneading can be performed using a known (closed) kneader such as a Banbury mixer, kneader, open roll, or the like.
The kneading temperature in the base kneading step is, for example, higher than 50°C and lower than 200°C, and the kneading time is, for example, more than 30 seconds and less than 30 minutes. In the base kneading step, in addition to the above components, compounding agents conventionally used in the rubber industry, such as softeners such as oils, zinc oxide, anti-aging agents, waxes, and vulcanization accelerators, may be appropriately added and kneaded as

desired.

In the finish kneading step, the kneaded material obtained in the base kneading step and a cross-linking agent are kneaded. The kneading temperature in the finish kneading step is, for example, higher than room temperature and lower than 80°C, and the kneading time is, for example, more than 1 minute and less than 15 minutes. In the finish kneading step, in addition to the above components, a vulcanization accelerator, zinc oxide, and the like may be appropriately added and kneaded as desired.

2. manufacture of tires

The tire according to the present invention can be produced as an unvulcanized tire by forming a tread rubber having a predetermined shape using the rubber composition obtained above as a cap rubber layer, and then forming the tire together with other tire members by an ordinary method on a tire molding machine.

When the tread portion is to have a multi-layer structure with a cap rubber layer and a base rubber layer, a rubber composition forming a base rubber layer can be obtained, basically, by using the above-described rubber component and compounding materials for forming the cap rubber layer, appropriately changing the compounding amount, and kneading in the same manner. Then, it is extruded together with the cap rubber layer and molded into a tread rubber of a predetermined shape, and thereafter molded together with other tire members on a tire molding machine by a normal method to produce an unvulcanized tire.

Specifically, on the molding drum, the inner liner as a member to ensure the airtightness of the tire, the carcass as a member to withstand the load, impact, and filling air pressure received by the tire, a belt member as a member to strongly tighten the carcass to increase the rigidity of the tread, and the like are wound, both ends of the carcass are fixed to both side edges, a bead portion as a member for fixing the tire to the rim is arranged, and formed into a toroid shape. Then the tread rubber is pasted on the center of the outer circumference, and the sidewall is pasted on the radial outer side to form the side portion. Thus, an unvulcanized tire is produced.

Then, the produced unvulcanized tire is heated and pressed in a vulcanizer to obtain a tire. The vulcanization step can be carried out by applying a known vulcanization means. The vulcanization temperature is, for example, higher than 120 °C and lower than 200 °C, and the vulcanization time is, for example, more than 5 minutes or and less than 15 minutes

As described above, the resulting tire facilitates transmission of force to the road surface when the vehicle starts moving, so that the rolling resistance at the time of starting can be sufficiently improved.

The tire according to the present invention is not particularly limited in category. It can be used as passenger car tires, large passenger car tires, large SUV tires, truck and bus tires, motorcycle tires, competition tires, and studless tires (winter tires), all-season tires, run-flat tires, aircraft tires, mining tires, non-pneumatic tires, etc., but using it as passenger car tires is preferred. Moreover, it is preferable to set it as a pneumatic tire.

[Example]

Examples (Examples) considered to be preferable when implementing the present invention are shown below, but the scope of the present invention is not limited to these Examples. In the examples, a pneumatic tire (tire size: 205/55R16, aspect ratio: 55%, land ratio: 65%) made from a composition obtained by using various chemicals mentioned below and changing the formulation according to each Table were evaluated. The results calculated based on the following evaluation methods are shown in Tables 2 to 5.

1. Rubber composition forming cap rubber layer

(1) Compounding material

(a) Rubber component

(a-1) NR: TSR20
(a-2) BR: Ubepol BR150B (Hi-cis BR) from Ube Industries, Ltd.
(cis content 97% by mass, trans content 2% by mass, vinyl content 1% by mass)
(a-3) SBR-1: Modified S-SBR obtained by the method shown in (Production Example 1) below
(Styrene content: 25% by mass, vinyl content: 25% by mass)
(a-4) SBR-2: HPR850 (modified S-SBR) manufactured by ENEOS Material Co., Ltd. (Styrene content: 27.5% by mass, vinyl content: 59.0% by mass)
(a-5) SBR-3: Modified S-SBR obtained by the method shown in (Production Example 2) below (Styrene content: 36%

by mass, vinyl content: 49% by mass, 25% oil extended product)
(a-6) SBR-4 : HPR840 (S-SBR) manufactured by ENEOS Material Co., Ltd. (Styrene content: 10% by mass, vinyl content: 42% by mass)

(Production example 1)

The above SBR-1 is produced according to the following procedure. First, two autoclaves having an internal volume of 10 L, having an inlet at the bottom and an outlet at the top, equipped with a stirrer and a jacket, were connected in series as reactors. Butadiene, styrene, and cyclohexane were each mixed in a predetermined ratio. This mixed solution is passed through a dehydration column filled with activated alumina, mixed with n-butyllithium in a static mixer to remove impurities. Then, it is continuously supplied from the bottom of the first reactor, further 2,2-bis(2-oxolanyl)propane as a polar substance and n-butyllithium as a polymerization initiator are continuously supplied at a predetermined rate from the bottom of the first reactor, and the internal temperature of the reactor is kept at 95°C. The polymer solution is continuously withdrawn from the top of the first reactor and supplied to the second reactor. The temperature of the second reactor is kept at 95°C, and a mixture of tetraglycidyl-1,3-bisaminomethylcyclohexane (monomer) as a modifier and an oligomer component is continuously added, as a 1000-fold dilution of cyclohexane, at a predetermined rate to carry out the denaturation reaction. This polymer solution is continuously withdrawn from the reactor, an antioxidant is added continuously by a static mixer, and the solvent is removed to obtain the desired modified diene polymer (SBR-1).

(Production example 2)

The above SBR-3 is produced according to the following procedure. A nitrogen purged autoclave reactor is charged with cyclohexane, tetrahydrofuran, styrene, and 1,3-butadiene. After adjusting the temperature of the contents of the reactor to 20°C, n-butyllithium is added to initiate the polymerization. Polymerize under adiabatic conditions and keep the maximum temperature below 85°C. When the polymerization conversion reached 99%, 1,3-butadiene was added, and after further polymerizing for 5 minutes, N,N-bis(trimethylsilyl)-3-aminopropyltrimethoxysilane was added as a modifier to carry out the reaction. After completion of the polymerization reaction, 2,6-di-tert-butyl-p-cresol is added. Next, the solvent is removed by steam stripping, and after drying with a hot roll adjusted to 110°C, 25 parts by mass of oil with respect to 100 parts by mass of the polymer is kneaded to obtain the desired oil-extended modified diene-based polymer (SBR-3) is obtained.

(Analysis of SBR)

The vinyl contents (unit: mass%) of the SBR-1 and SBR-3 are determined by infrared spectroscopy from the absorption intensity near 910 $cm^{-1}$, which is the absorption peak of the vinyl group. Also, the styrene content (unit: % by mass) is determined from the refractive index according to JIS K6383(1995).

(b) Compounding materials other than rubber components

(b-1) Carbon black: Dia Black N220 manufactured by Mitsubishi Chemical Corporation ($N_2SA$: 115 $m^2$ / g)
(b-2) Silica: Ultrasil VN3 manufactured by Evonik Industries Co. Ltd.
($N_2SA$: 175 $m^2$ / g, average primary particle size: 17 nm)
(b-3) Silane coupling agent: Si266 manufactured by Evonik Industries Co. Ltd. (bis (3-triethoxysilylpropyl) disulfide)
(b-4) Resin: SYLVATRAXX4401 manufactured by Kraton Co. Ltd.
(a-methylstyrene resin)
(b-5) Oil: Diana Process NH-70S manufactured by Idemitsu Kosan Co., Ltd.
(Aromatic process oil)
(b-6) Stearic acid: bead stearic acid "Tsubaki" manufactured by NOF Corporation
(b-7) Zinc oxide: 2 types of zinc oxide manufactured by Mitsui Mining & Smelting Co., Ltd.
(b-8) Sulfur: powdered sulfur (containing 5% oil) manufactured by Tsurumi Chemical Industry Co., Ltd.
(b-9) Vulcanization accelerator-1: Nocceler CZ manufactured by Ouchi Shinko Chemical Industry Co., Ltd.
(N-cyclohexyl-2-benzothiazylsulfenamide (CBS))
(b-10) Vulcanization accelerator-2: Soxinol D (DPG) manufactured by Sumitomo Chemical Co., Ltd. (N,N'-diphenylguanidine)

(2) Rubber composition forming cap rubber layer

Using a Banbury mixer, materials other than sulfur and a vulcanization accelerator are kneaded at 150°C for 5 minutes according to the formulations shown in Tables 2 to 5 to obtain a kneaded product. Note that, each compounding quantity is a mass part.

Next, sulfur and a vulcanization accelerator are added to the kneaded product, and kneaded at 80°C for 5 minutes using an open roll to obtain a rubber composition forming a cap rubber layer.

2. Rubber composition forming base rubber layer

In parallel, a rubber composition for forming the base rubber layer is obtained based on the formulation shown in Table 1 in the same manner as the rubber composition for forming the cap rubber layer.

[Table 1]

| Compounding material | Compounding amount (parts by mass) |
|---|---|
| NR(TSR20) | 70 |
| BR (UBEPOL-BR150B manufactured by Ube Industries, Ltd.) | 30 |
| Carbon black (Show Black N330T manufactured by Cabot Japan Co., Ltd.) | 35 |
| Stearic acid ("Tsubaki" stearic acid manufactured by NOF Corporation) | 2 |
| Zinc oxide (Zinc white No. 1 manufactured by Mitsui Mining & Smelting Co., Ltd.) | 4 |
| Wax (Sannok wax manufactured by Ouchi Shinko Chemical Industry., Ltd.) | 2 |
| Antiaging agent (Nocceler CZ manufactured by Ouchi Shinko Chemical Industry Co., Ltd.) | 3 |
| Antiaging agent (Antage RD manufactured by Kawaguchi Chemical Industry Co., Ltd.) | 1 |
| Sulfur (powder sulfur manufactured by Tsurumi Chemical Industry Co., Ltd.) | 1.7 |
| Vulcanization accelerator (Nocceler CZ-G manufactured by Ouchi Shinko Chemical Industry Co., Ltd.) | 1.2 |

3. Manufacture of pneumatic tires

Each rubber composition obtained is extruded into a predetermined shape so that the (cap rubber layer/base rubber layer) ratio is 80:20, to form a tread portion having the thickness G (mm) shown in Tables 2 to 5.

After that, an unvulcanized tire was formed by pasting the tread portion together with other tire members, press vulcanized for 10 minutes at 170°C, and each pneumatic tire (test tire) of Examples 1 to 16 and Comparative examples 1 to 11 shown in Tables 2 to 5 is manufactured.

4. Calculation of parameters

The following parameters are then determined for each test tire.

(1) Loss tangent (tan δ)

From the cap rubber layer of the tread portion of each test tire, a rubber test piece for viscoelasticity measurement is prepared by cutting a piece of length 20 mm × width 4 mm × thickness 2 mm so that the tire circumferential direction is the long side. For the rubber test piece, tan δ (30°Ctan δ) is measured using Eplexor series manufactured by GABO under the conditions of measurement temperature of 30°C, frequency of 10Hz, initial strain of 5%, dynamic strain of 1%, and deformation mode: tensile. The thickness direction of the sample is the radial direction of the tire. The 30°Ctan δ of the base rubber layer is 0.07.

(2) Glass transition temperature (Tg)

Regarding a rubber test piece for viscoelasticity measurement prepared by similarly cutting out from the cap rubber layer, tan δ is measured using Eplexor (registered trademark) series manufactured by GABO under the conditions of frequency of 10Hz, initial strain of 2%, amplitude of ±1%, and a heating rate of 2°C/min, with changing the temperature from -60°C to 40°C, and the temperature corresponding to the largest tan δ value in the obtained temperature distribution curve is determined as Tg (°C).

(3) Complex elastic modulus (E*)

Regarding a rubber test piece for viscoelasticity measurement prepared by similarly cutting out from the cap rubber layer, E* (MPa) (30°C E*) is measured using the GABO Eplexor series at a measurement temperature of 30°C, a frequency of 10 Hz, an initial strain of 5%, a dynamic strain of 1%, and a deformation mode: elongation. The 30°C E* of the base rubber layer is 5 MPa.

Then, (30°C E* × G) is calculated based on 30°C E* (MPa) and the thickness G (mm) of the tread portion.

(4) Acetone extractable content (AE) of cap rubber layer

Using a vulcanized rubber test piece cut out from the cap rubber layer of the tread portion of each test tire, AE (% by mass) is determined according to JIS K 6229:2015.

(5) Other parameters

Then, based on the specifications of each test tire and the formulation content, the product of the content (parts by mass) of styrene-butadiene rubber (SBR) having a styrene content of 25% by mass or less and the land ratio (%) is obtained, and the product of the filler content (parts by mass) and the flatness (%) is obtained.

5. Performance evaluation test (evaluation of rolling resistance at start-up)

Each test tire is installed on all wheels of a vehicle (domestic FF vehicle, displacement 2000cc), and filled with air so that the internal pressure is 250kPa (standardized internal pressure for passenger cars), and then start running on a dry asphalt test course, and measure the acceleration distance until reaching 10 km/h from a stationary state.

Then, with the result in Comparative Example 1 set to 100, the results are indexed based on the following formula to evaluate the rolling resistance performance at the time of starting. The larger the value, the better the rolling resistance performance at the time of starting.

(Rolling resistance performance index at start-up) = (Results of Comparative Example 1) / (Results of each test tire) × 100

Example 10 is according to the present invention and examples 1-9 and 11-16 are reference examples.

[Table 2]

| | EXAMPLE | | | | | | | |
|---|---|---|---|---|---|---|---|---|
| | 1 | 2 | 3 | 4 | 5 | 6 | 7 | 8 |
| Formulation of cap rubber layer | | | | | | | | |
| NR | 20 | - | - | - | - | 20 | 20 | - |
| SBR-1 | 80 | 80 | 60 | 60 | 60 | 80 | 80 | 80 |
| SBR-2 | - | - | - | - | - | - | - | - |
| SBR-3 | - | - | - | - | - | - | - | - |
| (Rubber portion) | - | - | - | - | - | - | - | - |
| (Oil-extended oil) | - | - | - | - | - | - | - | - |
| SBR-4 | - | - | - | - | - | - | - | - |
| BR | - | 20 | 40 | 40 | 40 | - | - | 20 |

(continued)

| | EXAMPLE | | | | | | | |
|---|---|---|---|---|---|---|---|---|
| | 1 | 2 | 3 | 4 | 5 | 6 | 7 | 8 |
| Formulation of cap rubber layer | | | | | | | | |
| Carbon black | 5 | 5 | 5 | 5 | 5 | 5 | 5 | 5 |
| Silica | 70 | 80 | 90 | 80 | 70 | 70 | 60 | 60 |
| Silane coupling agent | 5.6 | 6.4 | 7.2 | 6.4 | 5.6 | 5.6 | 4.8 | 4.8 |
| Resin | 60 | 30 | 20 | 10 | - | 10 | 10 | - |
| Oil | 20 | 35 | 55 | 40 | 35 | 20 | 20 | 25 |
| Stearic acid | 2 | 2 | 2 | 2 | 2 | 2 | 2 | 2 |
| Zinc oxide | 3 | 3 | 3 | 3 | 3 | 3 | 3 | 3 |
| Sulfur | 2 | 2 | 2 | 2 | 2 | 2 | 2 | 2 |
| Vulcanization accelerator-1 | 2 | 2 | 2 | 2 | 2 | 2 | 2 | 2 |
| Vulcanization accelerator-2 | 2 | 2 | 2 | 2 | 2 | 2 | 2 | 2 |
| Parameter | | | | | | | | |
| Tg (°C) | -9.5 | -25.1 | -34.3 | -37.3 | -40.5 | -29.4 | -28.7 | -36.2 |
| 30°C E* (MPa) | 4.0 | 5.4 | 5.3 | 6.6 | 7.0 | 7.8 | 5.7 | 6.2 |
| 30°C tan $\delta$ | 0.24 | 0.20 | 0.22 | 0.18 | 0.14 | 0.15 | 0.13 | 0.11 |
| Gauge G (mm) | 11 | 9.5 | 8 | 6 | 6 | 9.5 | 9.5 | 9.5 |
| 30°C E* $\times$ Gauge | 44.0 | 50.9 | 42.5 | 39.4 | 41.8 | 73.7 | 53.8 | 58.7 |
| AE (% by mass) | 29.5 | 24.3 | 26.0 | 19.8 | 15.4 | 13.5 | 14.2 | 12.1 |
| Land ratio (%) / Amount of SBR (parts by mass) | 0.81 | 0.81 | 1.08 | 1.08 | 1.08 | 0.81 | 0.81 | 0.81 |
| Aspect ratio (%) $\times$ Filler amount (parts by mass) | 3850 | 4400 | 4950 | 4400 | 3850 | 3850 | 3300 | 3300 |
| Performance evaluation | | | | | | | | |
| Rolling resistance at start-up | 159 | 139 | 160 | 171 | 163 | 106 | 133 | 125 |

[Table 3]

| | EXAMPLE | | | | | | | |
|---|---|---|---|---|---|---|---|---|
| | 9 | 10 | 11 | 12 | 13 | 14 | 15 | 16 |
| Formulation of cap rubber layer | | | | | | | | |
| NR | - | - | - | - | - | - | - | - |
| SBR-1 | 80 | - | 80 | 80 | 60 | 80 | 50 | 80 |
| SBR-2 | - | - | - | - | - | - | - | - |
| SBR-3 | - | - | - | - | - | - | - | - |
| (Rubber portion) | - | - | - | - | - | - | - | - |
| (Oil-extended oil) | - | - | - | - | - | - | - | - |
| SBR-4 | - | 80 | - | - | - | - | - | - |
| BR | 20 | 20 | 20 | 20 | 40 | 20 | 60 | 20 |
| Carbon black | 5 | 5 | 5 | 5 | 5 | 5 | 5 | 5 |
| Silica | 60 | 90 | 100 | 80 | 90 | 80 | 90 | 100 |
| Silane coupling agent | 4.8 | 7.2 | 8.0 | 6.4 | 7.2 | 6.4 | 7.2 | 8.0 |

(continued)

| | EXAMPLE | | | | | | | |
|---|---|---|---|---|---|---|---|---|
| | 9 | 10 | 11 | 12 | 13 | 14 | 15 | 16 |
| Formulation of cap rubber layer | | | | | | | | |
| Resin | - | 20 | 30 | 50 | 30 | 30 | 30 | 30 |
| Oil | 25 | 25 | 50 | 20 | 45 | 35 | 30 | 50 |
| Stearic acid | 2 | 2 | 2 | 2 | 2 | 2 | 2 | 2 |
| Zinc oxide | 3 | 3 | 3 | 3 | 3 | 3 | 3 | 3 |
| Sulfur | 2 | 2 | 2 | 2 | 2 | 2 | 2 | 2 |
| Vulcanization accelerator-1 | 2 | 2 | 2 | 2 | 2 | 2 | 2 | 2 |
| Vulcanization accelerator-2 | 2 | 2 | 2 | 2 | 2 | 2 | 2 | 2 |
| Parameter | | | | | | | | |
| Tg (°C) | -36.2 | -40.4 | -26.3 | -15.9 | -30 | -25.1 | -34 | -26.3 |
| 30°C E* (MPa) | 6.2 | 7.1 | 5.4 | 5.0 | 5.1 | 5.4 | 6.4 | 5.4 |
| 30°C tan $\delta$ | 0.11 | 0.11 | 0.23 | 0.23 | 0.23 | 0.20 | 0.25 | 0.23 |
| Gauge G (mm) | 7.5 | 6.0 | 11 | 11 | 11 | 11 | 7.5 | 11 |
| 30°C E* $\times$ Gauge | 46.4 | 42.5 | 59.1 | 54.8 | 56.5 | 59.0 | 48.0 | 59.1 |
| AE (% by mass) | 12.1 | 21.9 | 28.3 | 27.9 | 28.1 | 24.3 | 26.9 | 28.3 |
| Land ratio (%) / Amount of SBR (parts by mass) | 0.81 | 0.81 | 0.81 | 0.81 | 1.08 | 0.81 | 1.625 | 0.81 |
| Aspect ratio (%) $\times$ Filler amount (parts by mass) | 3300 | 4950 | 5500 | 4400 | 4950 | 4400 | 4950 | 7500 |
| Performance evaluation | | | | | | | | |
| Rolling resistance at start-up | 150 | 160 | 102 | 114 | 109 | 139 | 137 | 102 |

[Table 4]

| | COMPARATIVE EXAMPLE | | | | | | |
|---|---|---|---|---|---|---|---|
| | 1 | 2 | 3 | 4 | 5 | 6 | 7 |
| Formulation of cap rubber layer | | | | | | | |
| NR | - | - | - | - | - | - | - |
| SBR-1 | 60 | 100 | - | - | - | - | - |
| SBR-2 | - | - | - | - | 90 | - | - |
| SBR-3 | - | - | 100 | 125 | - | 125 | 100 |
| (Rubber portion) | - | - | (80) | (100) | - | (100) | (80) |
| (Oil-extended oil) | - | - | (20) | (25) | - | (25) | (20) |
| SBR-4 | - | - | - | - | - | - | - |
| BR | 40 | - | - | - | 10 | - | 20 |
| Carbon black | 5 | 5 | 5 | 5 | 5 | 5 | 5 |
| Silica | 90 | 120 | 120 | 90 | 110 | 120 | 80 |
| Silane coupling agent | 7.2 | 9.6 | 9.6 | 7.2 | 8.8 | 9.6 | 6.4 |
| Resin | 60 | 40 | 10 | - | - | - | - |
| Oil | 15 | 20 | 60 | 30 | 80 | 60 | 20 |
| Stearic acid | 2 | 2 | 2 | 2 | 2 | 2 | 2 |

(continued)

| | COMPARATIVE EXAMPLE | | | | | | |
|---|---|---|---|---|---|---|---|
| | 1 | 2 | 3 | 4 | 5 | 6 | 7 |
| Formulation of cap rubber layer | | | | | | | |
| Zinc oxide | 3 | 3 | 3 | 3 | 3 | 3 | 3 |
| Sulfur | 2 | 2 | 2 | 2 | 2 | 2 | 2 |
| Vulcanization accelerator-1 | 2 | 2 | 2 | 2 | 2 | 2 | 2 |
| Vulcanization accelerator-2 | 2 | 2 | 2 | 2 | 2 | 2 | 2 |
| Parameter | | | | | | | |
| Tg (°C) | -16.3 | -18.8 | -13.2 | -7.9 | -12.1 | -8.2 | -14.7 |
| 30°C E * (MPa) | 7.3 | 8.9 | 7.7 | 9.3 | 5.1 | 9.3 | 9.9 |
| 30°C tan $\delta$ | 0.31 | 0.31 | 0.35 | 0.28 | 0.25 | 0.36 | 0.23 |
| Gauge G (mm) | 11 | 20 | 20 | 20 | 20 | 9.5 | 9.5 |
| 30°C E * $\times$ Gauge | 79.8 | 177.6 | 153.0 | 186.8 | 102.0 | 88.4 | 93.9 |
| AE (% by mass) | 26.0 | 25.7 | 26.8 | 20.5 | 25.4 | 25.7 | 16.5 |
| Land ratio (%)/Amount of SBR (parts by mass) | 1.08 | 0.65 | 0.81 | 0.65 | 0.72 | 0.65 | 0.81 |
| Aspect ratio (%) $\times$ Filler amount (parts by mass) | 4950 | 6600 | 6600 | 4950 | 6050 | 6600 | 4400 |
| Performance evaluation | | | | | | | |
| Rolling resistance at start-up | 100 | 62 | 67 | 60 | 85 | 93 | 90 |

[Table 5]

| | COMPARATIVE EXAMPLE | | | |
|---|---|---|---|---|
| | 8 | 9 | 10 | 11 |
| Formulation of cap rubber layer | | | | |
| NR | - | - | - | - |
| SBR-1 | 40 | 60 | - | 80 |
| SBR-2 | - | - | - | - |
| SBR-3 | - | - | 125 | - |
| (Rubber portion) | - | - | (100) | - |
| (Oil-extended oil) | - | - | (25) | - |
| SBR-4 | - | - | - | - |
| BR | 60 | 40 | - | 20 |
| Carbon black | 5 | 5 | 5 | 5 |
| Silica | 80 | 110 | 120 | 80 |
| Silane coupling agent | 6.4 | 8.8 | 9.6 | 6.4 |
| Resin | 10 | - | - | 30 |
| Oil | 30 | 55 | 60 | 20 |
| Stearic acid | 2 | 2 | 2 | 2 |
| Zinc oxide | 3 | 3 | 3 | 3 |
| Sulfur | 2 | 2 | 2 | 2 |
| Vulcanization accelerator-1 | 2 | 2 | 2 | 2 |

(continued)

| | COMPARATIVE EXAMPLE | | | |
|---|---|---|---|---|
| | 8 | 9 | 10 | 11 |
| Formulation of cap rubber layer | | | | |
| Vulcanization accelerator-2 | 2 | 2 | 2 | 2 |
| Parameter | | | | |
| Tg (°C) | -40.3 | -42.6 | -9.7 | -24.5 |
| 30°C E* (MPa) | 9.4 | 12.3 | 9.0 | 7.4 |
| 30°C tan δ | 0.20 | 0.25 | 0.36 | 0.20 |
| Gauge G (mm) | 9.5 | 9.5 | 20 | 20 |
| 30°C E* × Gauge | 89.3 | 116.5 | 179.6 | 147.2 |
| AE (% by mass) | 16.5 | 19.0 | 25.7 | 19.8 |
| Land ratio (%) / Amount of SBR (parts by mass) | 1.625 | 1.08 | 0.65 | 0.81 |
| Aspect ratio (%) × Filler amount (parts by mass) | 4400 | 6050 | 6600 | 4400 |
| Performance evaluation | | | | |
| Rolling resistance at start-up | 93 | 78 | 61 | 68 |

## Claims

**1.** A tire having a tread portion, wherein

the cap rubber layer forming the tread portion is formed from a rubber composition containing 60 parts by mass or more and 80 parts by mass or less of styrene-butadiene rubber (SBR) having a styrene content of 20% by mass or less in 100 parts by mass of the rubber component, and containing 100 parts by mass or less of silica with respect to 100 parts by mass of the rubber component, whose loss tangent (30°C tan δ) measured in deformation mode: tensile under the conditions of temperature of 30°C, frequency of 10 Hz, initial strain of 5%, and dynamic strain rate of 1% is 0.25 or less; and

the thickness of the tread portion is 6 mm or more and 12 mm or less.

**2.** The tire according to claim 1, wherein the styrene-butadiene rubber (SBR) has a styrene content of 15% by mass or less.

**3.** The tire according to any one of claims 1 to 2, wherein the 30°C tan δ is 0.20 or less.

**4.** The tire according to any one of claims 1 to 3, wherein the thickness of the tread portion is 7 mm or more and 10 mm or less.

**5.** The tire according to any one of claims 1 to 4, wherein the glass transition temperature (Tg) of the cap rubber layer is -10°C or less, wherein the glass transition temperature (Tg) of the cap rubber layer is determined by the method defined in the description.

**6.** The tire according to any one of claims 1 to 5, wherein the complex elastic modulus (E*) of cap rubber layer measured under the conditions of temperature of 30°C, frequency of 10 Hz, initial strain of 5%, dynamic strain rate of 1%, and deformation mode: elongation (30°C E*)(MPa) and thickness G of the tread portion (mm) satisfy (30°C E* × G) ≦ 80.

**7.** The tire according to claim 6, wherein the (30°C E* × G) is 60 or less.

**8.** The tire according to claim 7, wherein the (30°C E* × G) is 40 or less.

**9.** The tire according to any one of claims 1 to 8, wherein the complex elastic modulus (E*) of cap rubber layer measured

under the conditions of temperature of 30°C, frequency of 10 Hz, initial strain of 5%, dynamic strain rate of 1%, and deformation mode: elongation (30°C E*) (MPa) is 8.00 MPa or less.

**10.** The tire according to any one of claims 1 to 9, wherein the tread portion is formed of the cap rubber layer and a base rubber layer provided inside the cap rubber layer, and the thickness of the cap rubber layer is 10% or more and less than 100% with respect to the thickness of the entire tread portion.

**11.** The tire according to any one of claims 1 to 10, wherein the silica content in the rubber composition forming the cap rubber layer is 90 parts by mass or less with respect to 100 parts by mass of the rubber component.

**12.** The tire according to any one of claims 1 to 11, wherein the land ratio is 55% or more, and the ratio of the land ratio (%) to the SBR content (parts by mass) having a styrene content of 20% by mass or less in 100 parts by mass of the rubber component of the cap rubber layer [land ratio (%)] / [SBR content (parts by mass) having a styrene content of 20% by mass or less in 100 parts by mass of the rubber component] is less than 1.5, wherein the land ratio is determined by the method defined in the description.

**13.** The tire according to any one of claims 1 to 12, wherein the aspect ratio is 30% or more and 60% or less, and the product of the aspect ratio and the content of the filler with respect to 100 parts by mass of the rubber component of the cap rubber layer [aspect ratio (%)] × [filler content (parts by mass)] is less than 7500, wherein the aspect ratio is determined by the method defined in the description.

**Patentansprüche**

**1.** Reifen, der einen Laufstreifenabschnitt aufweist, wobei

die den Laufstreifenabschnitt bildende Deckkautschukschicht mit einer 60 Massenteile oder mehr und 80 Massenteile oder weniger an Styrol-Butadien-Kautschuk (SBR), der einen Styrolgehalt von 20 Massen-% oder weniger aufweist, in 100 Massenteilen der Kautschukkomponente enthaltenden, und 100 Massenteile oder weniger an Siliziumdioxid bezogen auf 100 Massenteile der Kautschukkomponente enthaltenden Kautschukzusammensetzung gebildet ist, deren im Verformungsmodus: Zug unter den Bedingungen von Temperatur von 30°C, Frequenz von 10 Hz, anfänglicher Dehnung von 5% und dynamischer Dehnungsrate von 1% gemessener Verlusttangens 0,25 oder weniger beträgt; und
die Dicke des Laufstreifenabschnitts 6 mm oder mehr und 12 mm oder weniger beträgt.

**2.** Reifen nach Anspruch 1, wobei der Styrol-Butadien-Kautschuk (SBR) einen Styrolgehalt von 15 Massen-% oder weniger aufweist.

**3.** Reifen nach einem der Ansprüche 1 oder 2, wobei der 30°C tan $\delta$ 0,20 oder weniger beträgt.

**4.** Reifen nach einem der Ansprüche 1 bis 3, wobei die Dicke des Laufstreifenabschnitts 7 mm oder mehr und 10 mm oder weniger beträgt.

**5.** Reifen nach einem der Ansprüche 1 bis 4, wobei die Glasübergangstemperatur (Tg) der Deckkautschukschicht -10°C oder weniger beträgt, wobei die Glasübergangstemperatur (Tg) der Deckkautschukschicht durch das in der Beschreibung definierte Verfahren bestimmt ist.

**6.** Reifen nach einem der Ansprüche 1 bis 5, wobei der unter den Bedingungen von Temperatur von 30°C, Frequenz von 10 Hz, anfänglicher Dehnung von 5%, dynamischer Dehnungsrate von 1% und Verformungsmodus: Streckung gemessene komplexe Elastizitätsmodul (E*) der Deckkautschukschicht (30°C E*)(MPa) und die Dicke G des Laufstreifenabschnitts (mm) (30°C E* × G) ≤ 80 erfüllen.

**7.** Reifen nach Anspruch 6, wobei das (30°C E* × G) 60 oder weniger beträgt.

**8.** Reifen nach Anspruch 7, wobei das (30°C E* × G) 40 oder weniger beträgt.

**9.** Reifen nach einem der Ansprüche 1 bis 8, wobei der unter den Bedingungen von Temperatur von 30°C, Frequenz von 10 Hz, anfänglicher Dehnung von 5%, dynamischer Dehnungsrate von 1% und Verformungsmodus: Streckung

gemessene komplexe Elastizitätsmodul (E*) der Deckkautschukschicht (30°C E*) (MPa) 8,00 MPa oder weniger beträgt.

**10.** Reifen nach einem der Ansprüche 1 bis 9, wobei der Laufstreifenabschnitt mit der Deckkautschukschicht und einer innerseits der Deckkautschukschicht vorgesehenen Basiskautschukschicht gebildet ist, und die Dicke der Deckkautschukschicht 10% oder mehr und weniger als 100% bezogen auf die Dicke des gesamten Laufstreifenabschnitts beträgt.

**11.** Reifen nach einem der Ansprüche 1 bis 10, wobei der Siliziumdioxidgehalt in der die Deckkautschukschicht bildenden Kautschukzusammensetzung 90 Massenteile oder weniger bezogen auf 100 Massenteile der Kautschukkomponente beträgt.

**12.** Reifen nach einem der Ansprüche 1 bis 11, wobei der Positivprofilanteil 55% oder mehr beträgt, und das Verhältnis des Positivprofilanteils (%) zum SBR-Gehalt (Massenteile), der einen Styrolgehalt von 20 Massen-% oder weniger aufweist, in 100 Massenteilen der Kautschukkomponente der Deckkautschukschicht [Positivprofilanteil (%)] / [SBR-Gehalt (Massenteile), der einen Styrolgehalt von 20 Massen-% oder weniger aufweist, in 100 Massenteilen der Kautschukkomponente] weniger als 1,5 beträgt, wobei der Positivprofilanteil durch das in der Beschreibung definierte Verfahren bestimmt ist.

**13.** Reifen nach einem der Ansprüche 1 bis 12, wobei das Aspektverhältnis 30% oder mehr und 60% oder weniger beträgt, und das Produkt des Aspektverhältnisses und des Gehalts des Füllstoffs bezogen auf 100 Massenteile der Kautschukkomponente der Deckkautschukschicht [Aspektverhältnis (%)] × [Füllstoffgehalt (Massenteile)] weniger als 7500 beträgt, wobei das Aspektverhältnis durch das in der Beschreibung definierte Verfahren bestimmt ist.

## Revendications

**1.** Pneumatique ayant une portion de bande de roulement, dans lequel

la couche de caoutchouc de sommet formant la portion de bande de roulement est formée d'une composition de caoutchouc contenant 60 parties en masse ou plus et 80 parties en masse ou moins de caoutchouc de styrène-butadiène (SBR) ayant une teneur en styrène de 20 % en masse ou moins dans 100 parties en masse du composant de caoutchouc et contenant 100 parties en masse ou moins de silice par rapport à 100 parties en masse du composant de caoutchouc, dont la tangente de perte (30 °C tan $\delta$) mesurée en mode de déformation : traction sous les conditions de température de 30 °C, de fréquence de 10 Hz, de contrainte initiale de 5 %, et d'un taux de contrainte dynamique de 1 % est de 0,25 ou moins ; et
l'épaisseur de la portion de bande de roulement est de 6 mm ou plus et 12 mm ou moins.

**2.** Pneumatique selon la revendication 1, dans lequel le caoutchouc de styrène-butadiène (SBR) a une teneur en styrène de 15 % en masse ou moins.

**3.** Pneumatique selon l'une quelconque des revendications 1 à 2, dans lequel la tan $\delta$ à 30 °C est de 0,20 ou moins.

**4.** Pneumatique selon l'une quelconque des revendications 1 à 3, dans lequel l'épaisseur de la portion de bande de roulement est de 7 mm ou plus et de 10 mm ou moins.

**5.** Pneumatique selon l'une quelconque des revendications 1 à 4, dans lequel la température de transition vitreuse (Tg) de la couche de caoutchouc de sommet est de -10 °C ou moins, la température de transition vitreuse (Tg) de la couche de caoutchouc de sommet étant déterminée par le procédé décrit dans la description.

**6.** Pneumatique selon l'une quelconque des revendications 1 à 5, dans lequel le module élastique complexe (E*) de la couche de caoutchouc de sommet mesuré sous les conditions de température de 30 °C, de fréquence de 10 Hz, de contrainte initiale de 5 %, d'un taux de contrainte dynamique de 1 % et en mode de déformation : élongation (E* à 30 °C) (MPa) et une épaisseur G de la portion de bande de roulement (mm) satisfont (E* × G à 30 °C) ≤ 80.

**7.** Pneumatique selon la revendication 6, dans lequel le (E* × G à 30 °C) est de 60 ou moins.

**8.** Pneumatique selon la revendication 7, dans lequel le (E* × G à 30 °C) est de 40 ou moins.

**9.** Pneumatique selon l'une quelconque des revendications 1 à 8, dans lequel le module élastique complexe (E*) de la couche de caoutchouc de sommet mesuré sous les conditions de température de 30 °C, de fréquence de 10 Hz, de contrainte initiale de 5 %, de taux de contrainte dynamique de 1 % et en mode de déformation : élongation (E* à 30 °C) (MPa) est de 8,00 MPa ou moins.

**10.** Pneumatique selon l'une quelconque des revendications 1 à 9, dans lequel la portion de bande de roulement est formée de la couche de caoutchouc de sommet et d'une couche de caoutchouc de base fournie à l'intérieur de la couche de caoutchouc de sommet et l'épaisseur de la couche de caoutchouc de sommet est de 10 % ou plus et de moins de 100 % par rapport à l'épaisseur de la portion de bande de roulement entière.

**11.** Pneumatique selon l'une quelconque des revendications 1 à 10, dans lequel la teneur en silice dans la composition de caoutchouc formant la couche de caoutchouc de sommet est de 90 parties en masse ou moins par rapport à 100 parties en masse du composant de caoutchouc.

**12.** Pneumatique selon l'une quelconque des revendications 1 à 11, dans lequel le rapport de surface est de 55 % ou plus et le rapport du rapport de surface (%) à la teneur en SBR (parties en masse) ayant une teneur en styrène de 20 % en masse ou moins de 100 parties en masse du composant de caoutchouc de la couche de caoutchouc de sommet [rapport de surface (%)] / [teneur en SBR (parties en masse) ayant une teneur de 20 % en masse ou moins dans 100 parties en masse du composant de caoutchouc] est de moins de 1,5, le rapport de surface étant déterminé par le procédé défini dans la description.

**13.** Pneumatique selon l'une quelconque des revendications 1 à 12, dans lequel le rapport d'aspect est de 30 % ou plus et de 60 % ou moins et le produit du rapport d'aspect et de la teneur de la charge par rapport à 100 parties en masse du composant de caoutchouc de la couche de caoutchouc de sommet [rapport d'aspect (%)] × [teneur en charge (parties en masse)] est de moins de 7 500, le rapport d'aspect étant déterminé par le procédé défini dans la description.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2015159538 A
- JP 2018103931 A
- JP 2019084961 A
- JP 2020066394 A
- WO 2022074932 A1
- JP 2010111753 A
- US 4414370 B
- JP 59006207 A
- JP 5058805 B
- JP 1313522 A
- US 5010166 B


### Non-patent literature cited in the description


- *Toa Synthetic Research Annual Report TREND*, 2000 (3), 42-45